(19) Europäisches Patentamt / European Patent Office / Office européen des brevets

(11) **EP 4 408 927 B1**

(12) **EUROPEAN PATENT SPECIFICATION**

(45) Date of publication and mention
of the grant of the patent:
**14.01.2026   Bulletin 2026/03**

(21) Application number: **22793304.1**

(22) Date of filing: **27.09.2022**

(51) International Patent Classification (IPC):
*C08L 23/12* (2006.01)      *C08L 23/14* (2006.01)
*C08L 51/06* (2006.01)      *C08F 210/16* (2006.01)
*C08F 4/659* (2006.01)

(52) Cooperative Patent Classification (CPC):
(C-Sets available)
**C08F 210/16; C08L 23/12; C08L 23/14;**
C08F 4/659; C08F 4/65908; C08F 4/65912   (Cont.)

(86) International application number:
**PCT/US2022/044816**

(87) International publication number:
**WO 2023/049485 (30.03.2023 Gazette 2023/13)**

(54) **THERMOPLASTIC POLYOLEFIN COMPOSITION WITH REACTIVE COMPATIBILIZATION**

THERMOPLASTISCHE POLYOLEFINZUSAMMENSETZUNG MIT REAKTIVER
VERTRÄGLICHKEIT

COMPOSITION DE POLYOLÉFINE THERMOPLASTIQUE À COMPATIBILISATION RÉACTIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **27.09.2021   US 202163248744 P**

(43) Date of publication of application:
**07.08.2024   Bulletin 2024/32**

(73) Proprietor: **Dow Global Technologies LLC
Midland, MI 48674 (US)**

(72) Inventors:
• **MUNRO, Jeffrey C.
Lake Jackson, Texas 77566 (US)**
• **ALLEN, Mark P.
Midland, Michigan 48674 (US)**
• **BAWISKAR, Santosh S.
Lake Jackson, Texas 77566 (US)**

(74) Representative: **Boult Wade Tennant LLP
Salisbury Square House
8 Salisbury Square
London EC4Y 8AP (GB)**

(56) References cited:
**WO-A1-2013/048754      WO-A1-2013/090393**

(52) Cooperative Patent Classification (CPC): (Cont.)

C-Sets
**C08F 210/16, C08F 4/64193;**
**C08L 23/12, C08L 23/0815, C08L 51/06,**
**C08L 51/06;**
**C08L 23/12, C08L 23/12, C08L 53/00, C08L 51/06,**

**C08L 51/06;**
**C08L 23/12, C08L 53/00, C08L 51/06, C08L 51/06;**
**C08L 23/14, C08L 23/0815, C08L 51/06,**
**C08L 51/06;**
**C08L 23/14, C08L 53/00, C08L 51/06, C08L 51/06;**
C08F 210/16, C08F 210/14, C08F 2500/08,
C08F 2500/12

**Description**

BACKGROUND

Polyolefin elastomers (POEs), including ethylene/$\alpha$-olefin copolymers are commonly used as impact modifiers for thermoplastic polyolefin (TPO) compounds. When blended with polypropylene, other additives, and optionally reinforcing fillers (such as talc), POEs can be applied to provide a balance of stiffness, impact toughness, and flow properties to the TPO.

WO-A-2013/090393 relates to compositions comprising propylene polymers and a compatibilizer which is a functionalized olefin-based polymer. The functionalization agent is maleic anhydride, a peroxide or an amine.

The art recognizes the on-going need for blends that achieve greater impact efficiency and improved stiffness-toughness-flow balance in TPO compounds containing polypropylene. Further, the art recognizes the on-going need for TPO compounds with improved stiffness-toughness-flow-light transmittance balance.

SUMMARY

The present disclosure provides a composition. In an embodiment, the composition includes (A) a nonfunctionalized propylene-based polymer, (B) a functionalized propylene-based polymer, and (C) a functionalized ethylene-based polymer. The functionalized propylene-based polymer (B) and the functionalized ethylene-based polymer (C) each have a different functional group, the functional group selected from the group consisting of an anhydride and an amine, wherein when the functional group of the functionalized propylene-based polymer (B) is an anhydride, the functional group of the functionalized ethylene-based polymer (C) is an amine; and wherein when the functional group of the functionalized propylene-based polymer (B) is an amine, the functional group of the functionalized ethylene-based polymer (C) is an anhydride, wherein an ethylene-based polymer is a polymer that contains a majority amount of polymerized ethylene based on the weight of the polymer, and wherein a propylene-based polymer is a polymer that contains a majority amount of polymerized propylene based on the weight of the polymer.

DEFINITIONS

Any reference to the Periodic Table of Elements is that as published by CRC Press, Inc., 1990-1991. Reference to a group of elements in this table is by the new notation for numbering groups.

The numerical ranges disclosed herein include all values from, and including, the lower and upper value. For ranges containing explicit values (e.g., 1 or 2, or 3 to 5, or 6, or 7), any subrange between any two explicit values is included (e.g., the range 1-7 above includes subranges of 1 to 2; 2 to 6; 5 to 7; 3 to 7; 5 to 6; etc.).

Unless stated to the contrary, implicit from the context, or customary in the art, all parts and percents are based on weight, and all test methods are current as of the filing date of this disclosure.

The term "composition" refers to a mixture of materials which comprise the composition, as well as reaction products and decomposition products formed from the materials of the composition.

The terms "comprising," "including," "having" and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term "consisting essentially of" excludes from the scope of any succeeding recitation any other component, step, or procedure, excepting those that are not essential to operability. The term "consisting of" excludes any component, step, or procedure not specifically delineated or listed. The term "or," unless stated otherwise, refers to the listed members individually as well as in any combination. Use of the singular includes use of the plural and vice versa.

An "ethylene-based polymer" or "ethylene polymer" is a polymer that contains a majority amount of polymerized ethylene based on the weight of the polymer and, optionally, may comprise at least one comonomer. Ethylene-based polymers typically comprise at least 50 mole percent (mol%) units derived from ethylene (based on the total amount of polymerizable monomers).

A "heteroatom" is an atom other than carbon or hydrogen. The heteroatom can be a non-carbon atom from Groups IV, V, VI and VII of the Periodic Table. Nonlimiting examples of heteroatoms include: F, Cl, N, O, P, B, S, and Si.

A "hydrocarbon" is a compound containing only hydrogen atoms and carbon atoms.

An "interpolymer" is a polymer prepared by the polymerization of at least two different types of monomers. The generic term interpolymer thus includes copolymers (employed to refer to polymers prepared from two different types of monomers), and polymers prepared from more than two different types of monomers.

An "olefin-based polymer" or "polyolefin" is a polymer that contains a majority mole percent polymerized olefin monomer (based on total amount of polymerizable monomers), and optionally, may contain at least one comonomer.

Nonlimiting examples of olefin-based polymer include ethylene-based polymer and propylene-based polymer. Representative polyolefins include polyethylene, polypropylene, polybutene, polyisoprene and their various interpolymers.

A "polymer" is a polymeric compound prepared by polymerizing monomers, whether of the same or a different type. The generic term polymer thus embraces the term "homopolymer" (employed to refer to polymers prepared from only one type of monomer, with the understanding that trace amounts of impurities can be incorporated into the polymer structure), and the term "interpolymer," as defined hereinafter. Trace amounts of impurities, for example, catalyst residues, may be incorporated into and/or within the polymer. It also embraces all forms of copolymer, e.g., random, block, etc. The terms "ethylene/$\alpha$-olefin polymer" and "propylene/$\alpha$-olefin polymer" are indicative of copolymer as described above prepared from polymerizing ethylene or propylene respectively and one or more additional, polymerizable $\alpha$-olefin monomer. It is noted that although a polymer is often referred to as being "made of" one or more specified monomers, "based on" a specified monomer or monomer type, "containing" a specified monomer content, or the like, in this context the term "monomer" is understood to be referring to the polymerized remnant of the specified monomer and not to the unpolymerized species. In general, polymers herein are referred to as being based on "units" that are the polymerized form of a corresponding monomer.

A "propylene-based polymer" is a polymer that contains a majority amount of polymerized propylene based on the weight of the polymer and, optionally, may comprise at least one comonomer. Propylene-based polymers typically comprise at least 50 mole percent (mol%) units derived from propylene (based on the total amount of polymerizable monomers).

TEST METHODS

Density is measured in accordance with ASTM D792, Method B (g/cc or g/cm$^3$).

Differential Scanning Calorimetry (DSC) can be used to measure the melting, crystallization, and glass transition behavior of a polymer over a wide range of temperature. For example, the TA Instruments Discovery DSC, equipped with an RCS (refrigerated cooling system) and an autosampler was used to perform this analysis. During testing, a nitrogen purge gas flow of 50 ml/min was used. Each sample was melt pressed into a thin film at 190°C; the melted sample was then air-cooled to room temperature (25°C). A 3-10 mg, 6 mm diameter specimen was extracted from the cooled polymer, weighed, placed in a light aluminum pan (ca 50 mg), and crimped shut. Analysis was then performed to determine its thermal properties.

The thermal behavior of the sample was determined by ramping the sample temperature up and down to create a heat flow versus temperature profile. First, the sample was rapidly heated to 180°C and held isothermal for 3 minutes in order to remove its thermal history. Next, the sample was cooled to -80°C at a 10°C/minute cooling rate and held isothermal at -80°C for 3 minutes. The sample was then heated to 180°C (this is the "second heat" ramp) at a 10°C/minute heating rate. The cooling and second heating curves were recorded. The values determined are peak melting temperature, $T_m$, and peak crystallization temperature, $T_c$. Heat of fusion ($H_f$) (in Joules per gram), and the calculated % crystallinity for polyethylene samples using the Equation: % Crystallinity = (($H_f$)/292 J/g) x 100.

The heat of fusion ($H_f$) and the peak melting temperature were reported from the second heat curve. Peak crystallization temperature was determined from the cooling curve.

Glass transition temperature, $T_g$, was determined from the DSC heating curve where half the sample has gained the liquid heat capacity as described in Bernhard Wunderlich, The Basis of Thermal Analysis, in Thermal Characterization of Polymeric Materials 92, 278-279 (Edith A. Turi ed., 2d ed. 1997). Baselines were drawn from below and above the glass transition region and extrapolated through the $T_g$ region. The temperature at which the sample heat capacity was half-way between these baselines is the $T_g$.

Dynamic Mechanical Spectroscopy (DMS). The rheology of each composition was analyzed by DMS, using an Advanced Rheometric Expansion System (ARES), equipped with "25 mm stainless steel parallel plates," under a nitrogen purge. A constant temperature dynamic frequency sweep, in the range of 0.1 to 100 rad/s, was performed under nitrogen, at 230 °C. A sample of approximately "25 mm diameter x 3.3 mm thick" was cut from a compression molded disc (see below). The sample was placed on the lower plate, and allowed to melt for five minutes. The plates were then closed to a gap of "2.0 mm," and the sample trimmed to "25 mm" in diameter. The sample was allowed to equilibrate at 230 °C for five minutes, before starting the test. The complex viscosity was measured at a constant strain amplitude of 10%. The stress response was analyzed in terms of amplitude and phase, from which the storage modulus (G'), loss modulus (G"), dynamic viscosity $\eta^*$, and tan delta could be calculated. Each compression molded disc was formed at 230 °C, and 10 MPa molding pressure, for five minutes, ambient atmosphere, and then quenched between chilled platens (15-20°C) for two minutes. The complex viscosity, $\eta^*$, measured at a frequency of 0.1 rad/s is reported as V0.1. The complex viscosity, $\eta^*$, measured at a frequency of 100 rad/s is reported as V100. The rheology ratio, RR, was calculated as the ratio of V0.1/V100. The tan delta measured at a frequency of 0.1 rad/s is reported as tan $\delta$.

Flexural testing. Flexural testing was conducted in accordance with ASTM D790, Procedure A, Test Type 1. Specimens (12.7 cm (5 inch) long x 1.27 cm (0.5 inch) wide x 0.318 cm (0.125 inch) thick) were cut from the middle of ASTM D638 Type I injection molded tensile bars. Specimens were tested in a flat-wise orientation with a span of 5.08 cm (2 inches) and a cross-head speed of 0.127 cm/min (0.05 in/min). Flexural modulus is reported as tangent modulus of elasticity, as mega Pascals (MPa).

Melt Flow Rate (MFR) for propylene-based polymers was measured according to ASTM D1238, Condition 230°C/2.16 kilogram (kg) weight unless otherwise noted.

Melt index (MI) for ethylene-based polymers was measured in accordance with ASTM D1238, Condition 190°C/2.16 kilogram (kg) weight, also known as $I_2$, and is reported in g/10 min.

Multi-axial Instrumented Impact (MAII) Testing. Multi-axial Instrumented Impact (MAII) testing was conducted on an INSTRON CEAST 9350 Drop Tower Impact System (Dynatup), equipped with an environmental chamber and spring-assist, according to ASTM D3763. 10.16 cm (Four-inch) diameter, 0.318 cm (0.125 inch) thick injection molded discs were tested. The discs were conditioned at the test temperature, for at least four hours, prior to testing. Specimens were removed from the conditioning freezer, and placed in an environmental chamber at the specified test temperature. A test speed of 6.7 m/s was used, with a total test mass of 29.131 kg, and a 12.7 mm diameter tup. Five specimens were tested for each sample, at each temperature. Samples were tested at temperatures ranging from 0 °C to -40 °C. Peak and total energy are reported along with the percentage of specimens with a ductile failure mode (no cracks radiating more than 10 mm beyond the center of the impact point). MAII peak and total energy is reported in Joules (J).

Notched Izod. Notched Izod impact tests were conducted according to ASTM D256, Method A. Specimens (6.35 cm (2.5 inch) long by 1.27 cm (0.5 inch) wide by 0.318 cm (0.125 inch) thick) were cut from either compression molded plaques or from the middle of ASTM D638 Type I injection molded tensile bars. The samples were conditioned for at least 40 hours at 23 +/- 2 °C and 50 +/- 10 % relative humidity. For samples that are tested at non-ambient temperatures, the specimens were further conditioned at the test temperature for a minimum of 1 hour. Testing was conducted at 23°C, 0°C, and -30°C. The impact strength reported in kilojoules per square meter ($kJ/m^2$) is the average of results for five specimens.

Tensile testing. Tensile testing was conducted in accordance with ASTM D638 using 3.2 mm thick injection molded Type I tensile bars and a cross-head speed of 5.08 cm/min (2 in/min). Tensile yield strength (reported in MPa) and tensile elongation-at-break (reported in percent, %) are reported as the average for five specimens. In some cases, the specimens did not break at the maximum extension available on the tensile testing frame, in which case the elongation-at-break is reported to be greater than that maximum available elongation.

Transmittance testing. Total hemispherical luminous transmittance was measured according to ASTM D1003 using 10.16 cm (four-inch) diameter, 0.318 cm (0.125 inch) thick injection molded discs. Transmittance is reported in percent, %.

DETAILED DESCRIPTION

The present disclosure provides a composition. In an embodiment, the composition includes (A) a nonfunctionalized propylene-based polymer, (B) a functionalized propylene-based polymer, and (C) a functionalized ethylene-based polymer. The functionalized propylene-based polymer (B) and the functionalized ethylene-based polymer (C) each has a different functional group. The functional groups for each of the functionalized propylene-based polymer (B) and the functionalized ethylene-based polymer (C) are selected from groups capable of reacting with each other to form a covalent bond between the functionalized propylene-based polymer (B) and the functionalized ethylene-based polymer (C). The functional group for each of the functionalized propylene-based polymer (B) and the functionalized ethylene-based polymer (C) is selected from the group consisting of an anhydride and an amine.

*A. Nonfunctionalized propylene-based polymer*

The composition contains a nonfunctionalized propylene-based polymer. A "nonfunctionalized propylene-based polymer," as used herein, is a propylene-based polymer containing nonfunctional groups, such that the nonfunctionalized propylene-based polymer is a hydrocarbon and is void of a heteroatom. Nonlimiting examples of propylene-based polymer include propylene homopolymer, propylene/α-olefin terpolymer, propylene/α-olefin copolymer, propylene impact copolymer, and combinations thereof.

In an embodiment, the propylene-based polymer is a propylene homopolymer. The propylene homopolymer has one, some, or all of the following properties;

(i) a density from 0.89 g/cc to 0.91 g/cc, or 0.90 g/cc; and/or
(ii) a MFR from 0.1 g/10 min to 500 g/ 10 min, or from 1 g/10 min to 150 g/10 min, or from 10 g/10 min to 120 g/10 min, or from 10 g/10 min to 40 g/10min.

In an embodiment, the propylene-based polymer is a propylene/α-olefin copolymer. Nonlimiting examples of suitable α-olefins include $C_2$ and $C_4$-$C_{20}$ α-olefins, or $C_4$-$C_{10}$ α-olefins, or $C_4$-$C_8$ α-olefins. Representative α-olefins include ethylene, 1-butene, 1-pentene, 1-hexene, 1-heptene and 1-octene.

In an embodiment, the propylene-based polymer is a propylene impact copolymer. The propylene impact copolymer is a heterophasic polymer wherein a rubber phase (or a discontinuous phase) of discrete domains of ethylene/propylene copolymer is dispersed throughout a matrix phase (or a continuous phase) of propylene homopolymer. The propylene impact copolymer contains from 1 wt% to 40 wt%, or from 5 wt% to 25 wt%, or from 8 wt% to 15 wt% ethylene/propylene rubber phase, based on the total weight of the propylene impact copolymer.

In an embodiment, the propylene impact copolymer has one, some, or all of the following properties:

(i) from 1 wt% to 40 wt%, or from 5 wt% to 25 wt%, or from 8 wt% to 15 wt% ethylene/propylene rubber phase; and/or
(ii) a density from 0.88 g/cc to 0.90 g/cc; and/or
(iii) a MFR from 0.1 g/10 min to 500 g/ 10 min, or from 1 g/10 min to 150 g/10 min, or from 10 g/10min to 40 g/10 min.

A nonlimiting example of a suitable propylene impact copolymer is Pro-Fax SD242 available from LyondellBasell Industries.

*B. Functionalized propylene-based polymer*

The present composition includes (B) a functionalized propylene-based polymer and (C) a functionalized ethylene-based polymer. The functionalized propylene-based polymer (B) and the functionalized ethylene-based polymer (C) each has a respective functional group selected from an anhydride and an amine. The functional group of the functionalized propylene-based polymer is different than the functional group for the functionalized ethylene-based polymer. The functional group for each of the functionalized propylene-based polymer (B) and the functionalized ethylene-based polymer (C) is selected from an anhydride and an amine. When the functional group of the functionalized propylene-based polymer is an anhydride, the functional group of the functionalized ethylene-based polymer (C) is an amine. When the functional group of the functionalized propylene-based polymer is an amine, the functional group of the functionalized ethylene-based polymer is an anhydride. In this way, the functionalized propylene-based polymer and the functionalized ethylene-based polymer each has "a different" functional group wherein the functional group of the functionalized propylene-based polymer is capable of reacting with the functional group of the functionalized ethylene-based polymer to form a covalent bond between the functionalized propylene-based polymer and the functionalized ethylene-based polymer.

A "functionalized propylene-based polymer," as used herein, is a propylene-based polymer with functional groups that are either anhydride or amine, the functional groups being pendant to the polymer chain backbone. The functionalized propylene-based polymer contains from 0.1 wt% to 10 wt%, or from 0.1 wt% to 5 wt%, or from 0.3 wt% to 1.2 wt% functional group (either anhydride or amine) based on the total weight of the functionalized propylene-based polymer. The functionalized propylene-based polymer (with functional group of either anhydride or amine) has a MFR (2.16 kg, 190 °C) from 1 g/10 min to 2000 g/10 min, or from 10 g/10 min to 500 g/10 min, or from 40 g/10 min to 150 g/10 min.

Nonlimiting examples of suitable anhydride-functionalized propylene-based polymers are prepared by grafting via a free radical mechanism, for example initiated thermally or by a peroxide, maleic anhydride to a propylene-based polymer.

Nonlimiting examples of suitable amine-functionalized propylene-based polymers are prepared by imidization of a maleic anhydride-grafted propylene-based polymer with a primary-secondary diamine. Suitable primary-secondary diamines include compounds of structure (I):

$$H_2N-R_1-NH-R_2 \qquad (I).$$

In structure (I), $R_1$ is a divalent hydrocarbon radical, and preferably a linear hydrocarbon of the formula $-(CH_2)_n-$, where n is greater than, or equal to, 2, or n is from 2 to 10, or from 2 to 8, or from 2 to 6. $R_2$ is a monovalent hydrocarbon radical containing at least 1 carbon atom, and optionally may be substituted with a heteroatom containing group, such as OH or SH. Preferably, $R_2$ is a linear hydrocarbon of the formula $-(CH_2)_nCH_3$, where n is from 0 to 10, or n is from 0 to 9, or from 0 to 7, or from 0 to 5. In an embodiment, the primary-secondary diamine is selected from N-ethylethylenediamine (DEDA), N-phenylethylenediamine, N-phenyl-1,2-phenylenediamine, N-phenyl-1,4-phenylenediamine, or 4-(aminomethyl)piperidine. Additional primary-secondary diamines include, but are not limited to, N-(2-hydroxyethyl)ethylenediamine, N-ethyl-1,3-propanediamine, N-ethyl-1,4-butanediamine, N-(2-hydroxypropyl)ethylenediamine, N-methyl-ethylenediamine, N-methyl-1,3-propanediamine, N-methyl-1,4-butanediamine, and 1-(2-aminoethyl)-piperazine.

Nonlimiting examples of suitable functionalized propylene-based polymer include maleic anhydride (MAH)-grafted propylene homopolymer (MAH-g-PP), maleic anhydride-grafted propylene/α-olefin copolymer (ethylene, butene, hexene, octene comonomer), DEDA-functionalized propylene homopolymer (DEDA-g-PP), DEDA-functionalized propylene/α-olefin copolymer (ethylene, butene, hexene, and/or octene comonomer), and combinations thereof. In an embodiment, the functionalized propylene-based polymer is maleic anhydride (MAH)-grafted propylene homopolymer (MAH-g-PP) or DEDA-functionalized propylene homopolymer (DEDA-g-PP).

The present functionalized propylene-based polymer may comprise two or more embodiments disclosed herein.

*C. Functionalized ethylene-based copolymer*

A "functionalized ethylene-based polymer," as used herein, is an ethylene-based polymer with functional groups that are either anhydride or amine, the functional groups being pendant to the polymer chain backbone. Nonlimiting examples of suitable anhydride-functionalized ethylene-based polymers are prepared by grafting via a free radical mechanism, for example initiated thermally or by a peroxide, maleic anhydride to an ethylene-based polymer. Nonlimiting examples of suitable amine-functionalized ethylene-based polymers are prepared by imidization of a maleic anhydride-grafted ethylene-based polymer with a primary-secondary diamine. Suitable primary-secondary diamines include compounds of structure (I):

$$H_2N-R_1-NH-R_2 \qquad (I).$$

In structure (I), $R_1$ is a divalent hydrocarbon radical, and preferably a linear hydrocarbon of the formula $-(CH_2)_n-$, where n is greater than, or equal to, 2, or n is from 2 to 10, or from 2 to 8, or from 2 to 6. $R_2$ is a monovalent hydrocarbon radical containing at least 1 carbon atom, and optionally may be substituted with a heteroatom containing group, such as OH or SH. Preferably, $R_2$ is a linear hydrocarbon of the formula $-(CH_2)_nCH_3$, where n is from 0 to 10, or n is from 0 to 9, or from 0 to 7, or from 0 to 5. In an embodiment, the primary-secondary diamine is selected from N-ethylethylenediamine (DEDA), N-phenylethylenediamine, N-phenyl-1,2-phenylenediamine, N-phenyl-1,4-phenylenediamine, or 4-(aminomethyl)piperidine. Additional primary-secondary diamines include, but are not limited to N-(2-hydroxyethyl)ethylenediamine, N-ethyl-1,3-propanediamine, N-ethyl-1,4-butanediamine, N-(2-hydroxypropyl)ethylenediamine, N-methyl-ethylenediamine, N-methyl-1,3-propanediamine, N-methyl-1,4-butanediamine, and 1-(2-aminoethyl)-piperazine. The functionalized ethylene-based polymer contains from 0.1 wt% to 10 wt%, or from 0.1 wt% to 5 wt%, or from 0.3 wt% to 1.2 wt% functional group (either anhydride or amine) based on the total weight of the functionalized ethylene-based polymer. The functionalized ethylene-based polymer (with functional group of either anhydride or amine) has a MI from 0.1 g/10 min to 2000 g/10 min, or from 0.2 g/10 min to 50 g/10 min, or from 0.3 g/10 min to 25 g/10 min, or from 1 g/10 min to 5 g/10min.

Nonlimiting examples of suitable functionalized ethylene-based polymer include maleic anhydride (MAH)-grafted ethylene homopolymer (MAH-g-PE), maleic anhydride-grafted ethylene/α-olefin copolymer (propylene, butene, hexene, and/or octene comonomer), maleic anhydride-grafted ethylene/octene multi-block copolymer, DEDA-functionalized ethylene homopolymer (DEDA-g-PE), DEDA-functionalized ethylene/α-olefin copolymer (propylene, butene, hexene, and/or octene comonomer), DEDA-functionalized ethylene/octene multi-block copolymer, and combinations thereof.

The present functionalized ethylene-based polymer may comprise two or more embodiments disclosed herein.

In an embodiment, the functionalized ethylene-based polymer is a functionalized ethylene/α-olefin copolymer. Representative α-olefins include, but are not limited to, $C_3$-$C_{20}$ α-olefins, or $C_3$-$C_{10}$ α-olefins, or $C_4$-$C_{20}$ α-olefins, or $C_4$-$C_{10}$ α-olefins, or $C_4$-$C_8$ α-olefins. Representative α-olefins include propylene, 1-butene, 1-pentene, 1-hexene, 1-heptene and 1-octene.

In an embodiment, the functionalized ethylene-based polymer is made using an ethylene/$C_3$-$C_8$ α-olefin copolymer ("base ethylene/$C_3$-$C_8$ α-olefin copolymer") having a density from 0.850 g/cc to 0.920 g/cc, or from 0.850 g/cc to 0.910 g/cc, or from 0.855 g/cc to 0.905 g/cc, or from 0.855 g/cc to 0.890 g/cc.

In an embodiment, the functionalized ethylene-based polymer is made using an ethylene/octene copolymer having a density from 0.850 g/cc to 0.920 g/cc, or from 0.850 g/cc to 0.910 g/cc, or from 0.855 g/cc to 0.905 g/cc, or from 0.855 g/cc to 0.890 g/cc.

In an embodiment, the functionalized ethylene-based polymer is made using an ethylene/octene multi-block copolymer having a density from 0.850 g/cc to 0.920 g/cc, or from 0.850 g/cc to 0.910 g/cc, or from 0.855 g/cc to 0.890 g/cc.

*D. Nonfunctionalized ethylene-based polymer*

In an embodiment, the composition contains a nonfunctionalized ethylene-based polymer. A "nonfunctionalized ethylene-based polymer," as used herein, is an ethylene-based polymer containing no functional groups, such that the nonfunctionalized ethylene-based polymer is a hydrocarbon and is void of a heteroatom.

Nonlimiting examples of nonfunctionalized ethylene-based polymer include ethylene homopolymer, ethylene/α-olefin terpolymer, ethylene/α-olefin copolymer, ethylene/octene multi-block copolymer, and combinations thereof.

In an embodiment, the nonfunctionalized ethylene-based polymer is a nonfunctionalized ethylene/α-olefin copolymer. Representative α-olefins include, but are not limited to, $C_3$-$C_{20}$ α-olefins, or $C_3$-$C_{10}$ α-olefins, or $C_4$-$C_{20}$ α-olefins, or $C_4$-$C_{10}$ α-olefins, or $C_4$-$C_8$ α-olefins. Representative α-olefins include propylene, 1-butene, 1-pentene, 1-hexene, 1-heptene and 1-octene.

In an embodiment, the nonfunctionalized ethylene-based polymer is a nonfunctionalized random ethylene/octene copolymer having one, some, or all of the following properties:

> (i) a density from 0.850 g/cc to 0.920 g/cc, or from 0.850 g/cc to 0.910 g/cc, or from 0.860 g/cc to 0.905 g/cc, or from 0.860 g/cc to 0.890 g/cc; and/or
> (ii) a MI from 0.1 g/10 min to 2000 g/10 min, or from 0.2 g/10 min to 50 g/10 min, or from 0.5 g/10 min to 35 g/10 min, or from 0.5 g/10min to 8 g/10min.

In an embodiment, the nonfunctionalized ethylene-based polymer is a nonfunctionalized ethylene/octene multi-block copolymer (consisting only of ethylene and octene comonomer) and has one, some, or all of the following properties:

> (i) a Mw/Mn from 1.7, or 1.8 to 2.2, or 2.5, 3.5; and/or
> (ii) a density from 0.850 g/cc to 0.920 g/cc, or from 0.850 g/cc to 0.910 g/cc, or from 0.860 g/cc to 0.890 g/cc ; and/or
> (iii) a melting point, Tm, from 115°C, or 118°C, or 119°C, or 120°C to 120°C, or 123°C, or 125°C; and/or
> (iv) a MI from 0.1 g/10 min to 2000 g/ 10 min, or from 0.2 g/10 min to 50 g/10 min, or from 0.5 g/10 min to 8 g/10 min; and/or
> (v) 50-93 wt% soft segment and 50-7 wt% hard segment; and/or
> (vi) from 10 mol%, or 13 mol%, or 14 mol%, or 15 mol% to 16 mol%, or 17 mol%, or 18 mol%, or 19 mol%, or 20 mol% $C_4$-$C_{12}$ α-olefin in the soft segment; and/or
> (vii) from 0.5 mol%, or 1.0 mol%, or 2.0 mol%, or 3.0 mol% to 4.0 mol%, or 5 mol%, or 6 mol%, or 7 mol%, or 9 mol% octene in the hard segment; and/or
> (viii) an elastic recovery (Re) from 50%, or 60% to 70%, or 80%, or 90%, at 300%/min deformation rate at 21°C as measured in accordance with ASTM D 1708; and/or
> (ix) a polydisperse distribution of blocks and a polydisperse distribution of block sizes. Ethylene/octene multi-block copolymer with properties (i)-(ix) is disclosed US Patent No. 7,608,668.

Nonlimiting examples of suitable nonfunctionalized ethylene/octene multi-block copolymers are INFUSE 9530 and INFUSE 9507 available from Dow Inc.

The present nonfunctionalized ethylene-based polymer may comprise two or more embodiments disclosed herein.

*E. Filler*

In an embodiment, the present composition may include one or more fillers. Nonlimiting examples of suitable filler include talc, mica, calcium carbonate, nanoclay, carbon nanotube, carbon nanofiber, and combinations thereof.

*F. Composition*

The present composition is produced in a batch mixer, a continuous mixer, and combinations thereof. In an embodiment, the present composition is produced in a continuous mixer. Nonlimiting examples of suitable continuous mixers include co-rotating twin screw extruders, counter-rotating continuous mixers, tangential counter-rotating twin screw extruders, reciprocating kneaders, single screw extruders, multi-screw planetary extruders, and combinations thereof. The continuous mixer can be used as a single unit or as a combination of multiple continuous mixers, in tandem, for example.

In an embodiment, the compositions includes:

> (A) from 20 wt% to 98 wt%, or from 30 wt% to 95 wt%, or from 50 wt% to 85 wt% of the nonfunctionalized propylene-based polymer;
> (B) from 1 wt% to 50 wt%, or from 1 wt% to 20 wt%, or from 2 wt% to 16 wt% amine-functionalized propylene-based polymer; and
> (C) from 1 wt% to 50 wt%, or from 1 wt% to 20 wt%, or from 2 wt% to 16 wt% maleic anhydride-grafted ethylene-based polymer. Weight percent is based on total weight of the composition.

In an embodiment, the compositions includes:

(A) from 20 wt% to 98 wt%, or from 30 wt% to 95 wt%, or from 50 wt% to 85 wt% of the nonfunctionalized propylene-based polymer;

(B) from 1 wt% to 50 wt%, or from 1 wt% to 20 wt%, or from 2 wt% to 16 wt% maleic anhydride-grafted-propylene-based polymer; and

(C) from 1 wt% to 50 wt%, or from 1 wt% to 20 wt%, or from 2 wt% to 16 wt% amine-functionalized ethylene-based polymer. Weight percent is based on total weight of the composition. The composition has one, some, or all, or the following properties:

(i) an MFR from 1 g/10 min to 100 g/10 min, or from 2 g/10 min to 80 g/10 min, for from 4 g/10 min to 25 g/10min, and/or

(ii) a viscosity at 0.1 rad/s from 400 Pa.s to 11,000 Pa.s, or from 600 Pa.s to 6,000 Pa.s, or from 750 Pa.s to 3000 Pa.s, and/or

(iii) a viscosity at 100 rad/s from 100 Pa.s to 1000 Pa.s, or from 150 Pa.s to 700 Pa.s, or from 200 Pa.s to 400 Pa.s, and/or

(iv) a tan $\delta$ at 0.1 rad/s from 0.1 to 50, or from 0.5 to 20, or from 1 to 10. In an embodiment, a molded article composed of the composition has one, some, or all, of the following molded article properties:

(v) a flexural modulus from 300 MPa to 3000 MPa, or from 500 MPa to 2500 MPa, or from 750 MPa to 1300 MPa, or from 750 MPa to 1000 MPa; and/or

(vi) a tensile yield strength from 10 MPa to 40 MPa, or from 15 MPa to 35 MPa, or from 15 MPa to 30 MPa, or from 15 MPa to 25 MPa; and/or

(vii) a tensile elongation at break greater than 30%, or greater than 50%, or greater than 200%, or greater than 500%; and/or

(viii) a notched Izod at 23°C from 8 kJ/m$^2$ to 100 kJ/m$^2$, or from 10 kJ/m$^2$ to 100 kJ/m$^2$, or from 8 kJ/m$^2$ to 80 kJ/m$^2$, or from 10 kJ/m$^2$ to 80 kJ/m$^2$, or from 8 kJ/m$^2$ to 75 kJ/m$^2$, or from 10 kJ/m$^2$ to 75 kJ/m$^2$; and/or

(ix) a MAII total energy at -40 °C from 15 J to 60 J, or from 20 J to 55 J, or from 30 J to 50 J, or from 40 J to 50 J; and/or

(x) a transmittance from 30% to 99%, or from 35% to 80%, or from 40% to 70%, or from 40% to 60%.

In an embodiment, the present composition further includes (D) the nonfunctionalized ethylene-based polymer. The composition includes:

(A) from 50 wt% to 85 wt%, or from 55 wt% to 80 wt%, or from 60 wt% to 80 wt% nonfunctionalized propylene-based polymer;

(B) from 1 wt% to 10 wt%, or from 1 wt% to 7 wt%, or from 2 wt% to 5 wt% of an amine-functionalized propylene-based polymer having a MFR (2.16 kg, 190 °C) from 40 g/10 min to 60 g/10 min, or 55 g/10 min;

(C) from 1 wt% to 10 wt%, or from 1 wt% to 7 wt%, or from 2 wt% to 5 wt% of a maleic anhydride-grafted ethylene-based polymer having a MI from 0.3 g/10 min to 12.0 g/10 min, or from 1.0 g/10min to 2.0 g/10 min; and

(D) from 10 wt% to 25 wt%, or from 12 wt% to 25 wt% of the nonfunctionalized ethylene-based polymer (hereafter *Composition1*). Weight percent is based on total weight of the composition. *Composition1* has one, some, or all, or the following properties:

(i) an MFR from 1 g/10 min to 100 g/10 min, or from 2 g/10 min to 80 g/10 min, for from 4 g/10 min to 25 g/10min, and/or

(ii) a viscosity at 0.1 rad/s from 400 Pa.s to 11,000 Pa.s, or from 600 Pa.s to 6,000 Pa.s, or from 700 Pa.s to 3000 Pa.s, or from 750 Pa.s to 3,000 Pa.s, and/or

(iii) a viscosity at 100 rad/s from 100 Pa.s to 1000 Pa.s, or from 150 Pa.s to 700 Pa.s, or from 200 Pa.s to 400 Pa.s, and/or

(iv) a tan $\delta$ at 0.1 rad/s from 0.1 to 50, or from 0.5 to 20, or from 1 to 10. In an embodiment, a molded article composed of *Composition1* has one, some, or all, of the following molded article properties:

(v) a flexural modulus from 300 MPa to 3000 MPa, or from 500 MPa to 2500 MPa, or from 750 MPa to 1300 MPa, or from 750 MPa to 1000 MPa; and/or

(vi) a tensile yield strength from 10 MPa to 40 MPa, or from 15 MPa to 35 MPa, or from 15 MPa to 30 MPa, or from 15 MPa to 25 MPa; and/or

(vii) a tensile elongation at break greater than 20%, or greater than 50%, or greater than 200%, or greater than 500%; and/or

(viii) a notched Izod at 23°C from 5 kJ/m$^2$ to 100 kJ/m$^2$, or from 10 kJ/m$^2$ to 100 kJ/m$^2$, or from 7 kJ/m$^2$ to 90

kJ/m$^2$, or from 10 kJ/m$^2$ to 80 kJ/m$^2$, or from 10 kJ/m$^2$ to 75 kJ/m$^2$; and/or

(ix) a MAII total energy at -40 °C from 2 J to 60 J, or from 15 J to 60 J, or from 20 J to 55 J, or from 40 J to 50 J; and/or

(x) a transmittance from 30% to 99%, or from 35% to 80%, or from 35% to 70%, or from 40% to 60%.

In an embodiment, the composition includes

(A) from 50 wt% to 85 wt%, or from 55 wt% to 80 wt%, or from 60 wt% to 80 wt% nonfunctionalized propylene-based polymer that is a propylene homopolymer having an MFR from 10 g/10 min to 15 g/10 min;

(B) from 1 wt% to 10 wt%, or from 1 wt% to 7 wt%, or from 2 wt% to 5 wt% of an amine-functionalized propylene-based polymer having an MFR (2.16 kg, 190 °C) from 40 g/10 min to 60 g/10 min, or 55 g/10 min;

(C) from 1 wt% to 10 wt%, or from 1 wt% to 7 wt%, or from 2 wt% to 5 wt% of a maleic anhydride-grafted ethylene-based polymer having a MI from 1.0 g/10 min to 12.0 g/10 min; and

(D) from 10 wt% to 25 wt%, or from 12 wt% to 25 wt% of the nonfunctionalized ethylene-based polymer that is an ethylene/octene copolymer having a density from 0.860 g/cc to 0.905 g/cc, or from 0.860 g/cc to 0.890 g/cc, and an MI from 0.1 g/10 min to 35 g/10 min, or from 0.1 g/10 min to 5 g/10min (hereafter *Composition2*). *Composition2* has the one, some, or all, or the following properties:

(i) an MFR from 5 g/10 min to 10 g/10 min, and/or

(ii) a viscosity at 0.1 rad/s from 1900 Pa.s to 2400 Pa.s, or from 2000 Pa.s to 2300 Pa.s, or from 2000 Pa.s to 2100 Pa.s, or from 2000 Pa.s to 2050 Pa.s, and/or

(iii) a viscosity at 100 rad/s from 200 Pa.s to 500 Pa.s, or from 220 Pa.s to 400 Pa.s, or from 350 Pa.s to 400 Pa.s, or from 375 Pa.s to 399 Pa.s, and/or

(iv) a tan δ at 0.1 rad/s from 2.4 to 4.5, or from 3.5 to 4.5. In an embodiment, a molded article composed of *Composition2* has one, some, or all, of the following molded article properties:

(v) a flexural modulus from 750 MPa to 1150 MPa, or from 750 MPa to 850 MPa; and/or

(vi) a tensile yield strength from 15 MPa to 25 MPa; and/or

(vii) a tensile elongation at break greater than 20%, or greater than 500%; and/or

(viii) a notched Izod at 23°C from 30 kJ/m$^2$ to 80 kJ/m$^2$, or from 70 kJ/m$^2$ to 80 kJ/m$^2$; and/or

(ix) a MAII total energy at -40 °C from 15 J to 50 J, or from 40 J to 50 J; and/or

(x) a transmittance from 40% to 70%, or from 40% to 50%.

In an embodiment, the present composition further includes (D) the nonfunctionalized ethylene-based polymer. The composition includes

(A) from 50 wt% to 85 wt%, or from 55 wt% to 80 wt%, or from 60 wt% to 80 wt% nonfunctionalized propylene-based polymer that is a propylene impact copolymer;

(B) from 1 wt% to 10 wt%, or from 1 wt% to 7 wt%, or from 2 wt% to 5 wt% of an amine-functionalized propylene-based polymer having an MFR (2.16 kg, 190 °C) from 40 g/10 min to 60 g/10 min, or 55 g/10 min;

(C) from 1 wt% to 10 wt%, or from 1 wt% to 7 wt%, or from 2 wt% to 5 wt% of a maleic anhydride-grafted ethylene-based polymer having a MI from 1.0 g/10 min to 4.0 g/10 min, or from 1.0 g/10 min to 2.0 g/10min; and

(D) from 10 wt% to 25 wt%, or from 12 wt% to 25 wt% of the nonfunctionalized ethylene-based polymer having an MI from 0.5 g/10 min to 6.0 g/10 min, or from 0.5 g/10 min to 1.5 g/10 min, and a density from 0.860 g/cc to 0.890 g/cc, or from 0.860 g/cc to 0.88 g/cc (hereafter *Composition3*). *Composition3* has one, some, or all, of the following properties:

(i) an MFR from 15 g/10 min to 25 g/10 min, or from 20 g/10 min to 25 g/10 min; and/or

(ii) a viscosity at 0.1 rad/s from 650 Pa.s to 800 Pa.s, or from 700 Pa.s to 800 Pa.s; and/or

(iii) a viscosity at 100 rad/s from 200 Pa.s to 300 Pa.s, or from 200 Pa.s to 250 Pa.s; and/or

(iv) a tan δ at 0.1 rad/s from 5.0 to 10.0. In an embodiment, a molded article composed of *Composition3* has one, some, or all, of the following molded article properties:

(v) a flexural modulus from 800 MPa to 1050 MPa, or from 800 MPa to 900 MPa;

and/or
(vi) a tensile yield strength from 15 MPa to 25 MPa; and/or
(vii) a tensile elongation at break from 100% to 500%; and/or
(viii) a notched Izod at 23°C from 10 kJ/m$^2$ to 50 kJ/m$^2$, or from 10 kJ/m$^2$ to 20 kJ/m$^2$;
and/or
(ix) a MAII total energy at -40°C from 25 J to 40 J, or from 20 J to 30 J; and/or
(x) a transmittance from 45% to 60%, or from 50% to 60%.

In an embodiment, the composition includes

(A) from 50 wt% to 85 wt%, or from 50 wt% to 80 wt%, or from 50 wt% to 70 wt% nonfunctionalized propylene-based polymer that is a propylene homopolymer;
(B) from 1 to 20 wt%, or from 1 wt% to 15 wt%, or from 5 wt% to 15 wt% maleic anhydride-grafted propylene-based polymer having an MFR (2.16 kg, 190 °C) from 100 g/10 min to 140 g/10 min;
(C) from 1 wt% to 20 wt%, or from 1 wt% to 15 wt%, or from 5 wt% to 15 wt% amine-functionalized ethylene-based polymer; and
(D) from 10 wt% to 25 wt%, or from 12 wt% to 25 wt% nonfunctionalized ethylene-based polymer (hereafter *Composition4*). *Composition4* has one, some, or all of the following properties:

(i) an MFR from 1 g/10 min to 5 g/10 min; and/or
(ii) a viscosity at 0.1 rad/s from 1000 Pa.s to 3000 Pa.s, or from 2000 Pa.s to 3000 Pa.s, or from 1200 Pa.s to 2500 Pa.s; and/or
(iii) a viscosity at 100 rad/s from 200 Pa.s to 400 Pa.s, or from 300 Pa.s to 340 Pa.s;
and/or
(iv) a tan δ at 0.1 rad/s from 1.0 to 3.0, or from 1.0 to 2.0. In an embodiment, a molded article composed of *Composition4* has one, some, or all, of the following molded article properties:

(v) a flexural modulus from 900 MPa to 1300 MPa, or from 900 MPa to 1000 MPa;
and/or
(vi) a tensile yield strength from 15 MPa to 30 MPa, or from 15 MPa to 25 MPa;
and/or
(vii) a tensile elongation at break greater than 30%, or from greater than 550%;
and/or
(viii) a notched Izod at 23°C from 57 kJ/m$^2$ to 70 kJ/m$^2$, or from 60 kJ/m$^2$ to 70 kJ/m$^2$;
and/or
(ix) a MAII total energy at -40 °C from 2 J to 40 J, or from 20 J to 40 J; and/or
(x) a transmittance from 35% to 70%, or from 50% to 60%.

In an embodiment, the composition includes

(A) from 50 wt% to 85 wt%, or from 50 wt% to 80 wt%, or from 60 wt% to 80 wt% nonfunctionalized propylene-based polymer that is a propylene impact copolymer;
(B) from 1 to 20 wt%, or from 1 wt% to 15 wt%, or from 1 wt% to 5 wt% maleic anhydride-grafted propylene-based polymer having an MFR (2.16 kg, 190 °C) from 100 g/10 min to 140 g/10 min;
(C) from 1 wt% to 20 wt%, or from 1 wt% to 15 wt%, or from 1 wt% to 5 wt% amine-functionalized ethylene-based polymer; and
(D) from 10 wt% to 25 wt%, or from 12 wt% to 25 wt% nonfunctionalized ethylene-based polymer (hereafter *Composition5*). *Composition5* has one, some, or all of the following properties:

(i) an MFR from 1 g/10 min to 25 g/10 min; and/or
(ii) a viscosity at 0.1 rad/s from 500 Pa.s to 3000 Pa.s, or from 600 Pa.s to 1000 Pa.s;
and/or
(iii) a viscosity at 100 rad/s from 200 Pa.s to 240 Pa.s; and/or
(iv) a tan δ at 0.1 rad/s from 2.5 to 7.0. In an embodiment, a molded article composed of *Composition4* has one, some, or all, of the following molded article properties:

(v) a flexural modulus from 1000 MPa to 1100 MPa; and/or
(vi) a tensile yield strength from 15 MPa to 25 MPa; and/or

(vii) a tensile elongation at break greater than 80%; and/or
(viii) a notched Izod at 23°C from 10 kJ/m$^2$ to 60 kJ/m$^2$; and/or
(ix) a MAII total energy at -40 °C from 25 J to 45 J; and/or
(x) a transmittance from 40% to 60%.

In an embodiment, the composition includes

(A) from 50 wt% to 85 wt%, or from 50 wt% to 80 wt%, or from 50 wt% to 70 wt% nonfunctionalized propylene-based polymer that is a propylene homopolymer;
(B) from 1 to 20 wt%, or from 1 wt% to 10 wt%, or from 1 wt% to 5 wt% maleic anhydride-grafted propylene-based polymer having an MFR (2.16 kg, 190 °C) from 100 g/10 min to 140 g/10 min;
(C) from 1 wt% to 20 wt%, or from 1 wt% to 15 wt%, or from 1 wt% to 10 wt%, or from 1 wt% to 5 wt% amine-functionalized ethylene-based polymer;
(D) from 10 wt% to 25 wt%, or from 10 wt% to 25 wt%, or from 12 wt% to 25 wt% nonfunctionalized ethylene-based polymer; and
(E) from 1 wt% to 15 wt%, or from 5 wt% to 10 wt% filler (hereafter *Composition6*). *Composition6* has one, some, or all of the following properties:

(i) a viscosity at 0.1 rad/s from 2500 Pa.s to 2700 Pa.s; and/or
(ii) a viscosity at 100 rad/s from 300 Pa.s to 400 Pa.s; and/or
(iii) a tan $\delta$ at 0.1 rad/s from 1.0 to 3.0. In an embodiment, a molded article composed of *Composition6* has a notched Izod at 23°C from 10 kJ/m$^2$ to 15 kJ/m$^2$.

Each of *Composition1, Composition2, Composition3, Composition4, Composition5,* and *Compostion6* is void of, or is otherwise free of, thermoplastic polyurethane and/or a polymer containing isocyanate moiety.
The present composition composed of (A) nonfunctionalized propylene-based polymer, (B) functionalized propylene-based polymer, (C) functionalized ethylene-based polymer, and (D) nonfunctionalized ethylene-based polymer undergo a reaction during compounding, wherein the functional groups of the functionalized propylene-based polymer react with the functional groups of the functionalized ethylene-based polymer to form covalent bonds between the functionalized propylene-based polymer and the functionalized ethylene-based polymer. The amine functional groups and the anhydride functional groups undergo an imidization reaction to form an imide linkage between the two functionalized polymers. Depending on the number of functional groups on each polymer, multiple imide bonds form between the functionalized polymer chains. Blends of the propylene-based polymers and ethylene-based polymers are immiscible. The propylene-based polymers and the ethylene-based polymers form separate domains in the blend. In-situ reaction between the functionalized propylene-based polymer and the functionalized ethylene-based polymer can improve the compatibility of the propylene-based polymer domains and the ethylene-based polymer domains and/or improve the interfacial strength between the propylene-based polymer domains and the ethylene-based polymer domains. The reaction during compounding results in a TPO composition with more shear-thinning rheology (as indicated by higher melt viscosity at low shear rates with similar melt viscosity at high shear rates) and higher melt elasticity (as indicated by lower tan $\delta$), and that has improved impact toughness when molded into an article. The present composition provides an improved balance of light transmittance, stiffness, and impact toughness. To form a blend of a propylene-based polymer and an ethylene-based polymer that has high light transmittance an ethylene-based polymer that has the same refractive index as the propylene-based polymer may be used, such as an ethylene/octene copolymer with density of 0.902 g/cc. It is known that ethylene/octene copolymers with lower density, for example from 0.857 g/cc to 0.870 g/cc, are more efficient impact modifiers for polypropylene, than ethylene/octene copolymers with 0.902 g/cc density. However, blends of propylene-based polymers with these lower density ethylene/octene copolymers tend to have lower light transmittance. In the present compositions, the functionalized ethylene-based polymer and/or the nonfunctionalized ethylene-based polymer can have higher density and a refractive index that more closely matches the refractive index of the nonfunctionalized propylene based polymer and functionalized propylene-based polymer, advantageously resulting in a light transmittance greater than 40% and suitable impact toughness for the present composition.

*G. Article*

The present composition can be molded into an article. Many types of molding operations can be used to form articles or parts from the present composition, including, but not limited to, injection molding, blow molding, compression molding, profile and sheet extrusion, and thermoforming. In an embodiment, the article is injection molded. Nonlimiting examples of molded articles formed from the present composition include automotive interior and exterior components such as bumper fascia, airbag covers, door trim panels, instrument panels, seat backrests, exterior body panels (liftgate panels, door panels, fenders), rocker panels, cladding, wheel flares; household and personal articles such as freezer containers, storage containers, toys, electronics and computer parts, footwear components, and building materials.

By way of example, and not limitation, examples of the present disclosure are provided.

EXAMPLES

The materials used in comparatives samples (CS) and inventive examples (IE) are provided in Table 1.

Table 1: Materials

| Component | Details | Source |
|---|---|---|
| (A) nonfunctionalized propylene-based polymer | | |
| Braskem PP D115A | Homopolymer polypropylene, d 0.90g/cc, MFR 11 g/10 min (2.16 kg, 230 °C) | Braskem |
| Braskem PP F1000HC | Homopolymer polypropylene, MFR 115 g/10 min (2.16 kg, 230 °C) | Braskem |
| Pro-fax SD242 | Impact copolymer polypropylene, d 0.898 g/cc, MFR 35 g/10 min (2.16 kg, 230 °C), 13.6 wt% ethylene/propylene rubber phase. | LyondellBasell Industries |
| (B) functionalized propylene-based polymer | | |
| DEDA-g-PP | Amine functionalized homopolymer polypropylene, MFR 55 dg/min (2.16 kg, 190 °C) | Dow Inc |
| FUSABOND P613 | Maleic anhydride grafted homopolymer polypropylene, 0.55 wt% MAH, MFR 50 g/10 min (1.0 kg, 190 °C), MFR 125 g/10 min (2.16 kg, 190 °C) | Dow Inc |
| Polybond 3200 | Maleic anhydride grafted homopolymer polypropylene, 0.8 - 1.2 wt% MAH, d 0.91 g/cc, MFR 115 g/10 min (2.16 kg, 190 °C), MFR 384 g/10 min (2.16 kg, 230 °C) | Addivant |
| (C) functionalized ethylene-based polymer | | |
| DEDA-g-INFUSE 9530 | Amine functionalized polyolefin elastomer, MI 2.8 g/10 min | Dow Inc |
| DEDA-g-INFUSE 9507 | Amine functionalized polyolefin elastomer, MI 4.9 g/10 min | Dow Inc |
| DEDA-g-ENGAGE 8450 | Amine functionalized polyolefin elastomer, MI 0.4 g/10 min | Dow Inc |
| DEDA-g-ENGAGE 8402 | Amine functionalized polyolefin elastomer, MI 22.4 g/10 min | Dow Inc |
| MAH-g-ENGAGE 8450 | Maleic anhydride grafted polyolefin elastomer, 1.1 wt% MAH, MI 0.3 g/10 min | Dow Inc |
| MAH-g-ENGAGE 8402 | Maleic anhydride grafted polyolefin elastomer, 1.1 wt% MAH, MI 11.4 g/10 min | Dow Inc |
| MAH-g-INFUSE 9507 | Maleic anhydride grafted polyolefin elastomer, 1.0 wt% MAH, MI 3.7 g/10 min | Dow Inc |
| MAH-g-INFUSE 9530 | Maleic anhydride grafted polyolefin elastomer, 1.1 wt% MAH, MI 2.7 g/10 min | Dow Inc |
| FUSABOND N493 | Maleic anhydride grafted polyolefin elastomer, 0.5 wt% MAH, MI 1.6 g/10 min | Dow Inc |
| (D) nonfunctionalized ethylene-based polymer | | |
| POE1 | Ethylene-octene copolymer, density 0.862 g/cc, MI 1.0 g/10 min | Dow Inc |

(continued)

| Component | Details | Source |
|---|---|---|
| INFUSE 9530 | Ethylene/octene multi-block copolymer, density 0.887 g/cc, MI 5.0 g/10 min | Dow Inc |
| INFUSE 9507 | Ethylene/octene multi-block copolymer, density 0.866 g/cc, MI 5.0 g/10 min | Dow Inc |
| ENGAGE 8402 | Ethylene-octene copolymer, density 0.902 g/cc, MI 30 g/10 min | Dow Inc |
| ENGAGE 8450 | Ethylene-octene copolymer, density 0.902 g/cc, MI 3.0 g/10 min | Dow Inc |
| (E) filler | | |
| Jetfil 700C | Talc | Imerys |
| Other | | |
| MAH | Maleic anhydride | Sigma Aldrich |
| DEDA | N-ethylethylenediamine | Sigma Aldrich |
| Luperox 101 | peroxide | Arkema |
| Irganox B225 | Anti-oxidant | BASF |

1. Preparation of POE1

Copolymer POE1 was prepared using a single loop reactor operated at steady state conditions. The catalyst and cocatalysts were as follows: catalyst was 6',6'''-(((diisopropylsilanediyl)bis(methylene)) bis(oxy))bis(3-(3,6-di-tert-butyl-9H-carbazol-9-yl)-3'-fluoro-5-(2,4,4-trimethylpentan-2-yl)-[1,1'-biphenyl]-2-ol)dimethyl-hafnium (as described in WO2018/022975) supplied by Boulder Scientific; cocatalyst-1 was a mixture of methyldi($C_{14-18}$ alkyl)ammonium salts of tetrakis(pentafluorophenyl)-borate, prepared by reaction of a long chain trialkylamine (Armeen M2HT, available from Akzo-Nobel, Inc.), HCl and Li[B($C_6F_5$)$_4$], substantially as disclosed in USP 5,919,983, Ex. 2 (no further purification performed) supplied by Boulder Scientific; and cocatalyst-2 was iso-butyl, methyl, branched, cyclic and linear modified methyl aluminosiloxane (MMAO), available from AkzoNobel.

All materials (ethylene, 1-octene) and the process solvent (a narrow boiling range high-purity isoparaffinic solvent, ISOPAR E commercially available from Exxon Mobil Corporation), were purified with molecular sieves, before introduction into the reaction environment. Hydrogen was supplied in pressurized cylinders, as a high purity grade, and was not further purified. The reactor monomer feed (ethylene) stream was pressurized to above reaction pressure at 3.96 MPa (575 psig). The solvent and comonomer (1-octene) feed was pressurized to above reaction pressure. The individual catalyst components were diluted to specified component concentrations with purified solvent (ISOPAR E) and pressured to above reaction pressure.

All reaction feed flows were measured with mass flow meters, and independently controlled. The continuous solution polymerization reactor was a controlled loop. The reactor had independent control of all fresh solvent, monomer, comonomer, hydrogen, and catalyst component feeds. The combined solvent, monomer, comonomer and hydrogen feed to the reactor was temperature controlled from 5°C to 50°C, and typically 40°C, by passing the feed stream through a heat exchanger. The fresh comonomer feed to the polymerization reactor was fed in, with the solvent feed.

The primary catalyst component feed was controlled, to maintain the reactor monomer concentration at a specified target. The two cocatalyst components were fed, based on specified molar ratios to the primary catalyst component. Immediately following each fresh injection location (either feed or catalyst), the feed streams were mixed with the circulating polymerization reactor contents. The contents of each reactor were continuously circulated through heat exchangers to maintain isothermal reaction environment at the specified temperature. The effluent from the first polymerization reactor (containing solvent, monomer, comonomer, hydrogen, catalyst components, and molten polymer) exited the reactor loop, and then contacted with water, to stop the reaction. In addition, various additives, such as anti-oxidants, can be added at this point. The stream then entered a two stage separation and devolatilization system, where the polymer was removed from the solvent, hydrogen, and unreacted monomer and comonomer. The solvent (plus dissolved components) was recycled. The recycled stream was purified, before entering the reactor again. The separated and devolatilized polymer melt was pumped through a die, and pelletized.

Process conditions to produce POE1 are provided in Table A below. POE1 has a density of 0.862 g/cc and melt index of 1.0 g/10 min (2.19 kg, 190 °C).

Table A: Polymerization Conditions for POE11

| Name | POE1 |
|---|---|
| Catalyst Metal Conc., ppm metal | 14.9 |
| Catalyst solution flow, kg/hr (lb/hr) | 1.08 (2.39) |
| Cocatalyst-1 conc., ppm cocat | 122 |
| Cocatalyst-1 solution flow, kg/hr (lb/hr) | 1.05 (2.31) |
| Cocatalyst-2 conc., ppm Al | 48.8 |
| Cocatalyst-2 solution flow, kg/hr (lb/hr) | 0.50 (1.10) |
| Reactor Temperature, °C | 170 |
| Solvent Flow, kg/hr (lb/hr) | 381 (840) |
| Ethylene Flow, kg/hr (lb/hr) | 77 (170) |
| Octene Flow, kg/hr (lb/hr) | 98 (216) |
| Hydrogen Flow, sccm | 3944 |
| Ethylene Conversion, % | 85 |
| Polymer Concentration, % | 23 |
| Production Rate, kg/hr (lb/hr) | 118 (261) |

2A. Functionalization: Preparation of DEDA-g-PP

A Coperion ZSK-26MC twin-screw extruder was used for imidization reactions of MAH-g-PP. The 26 mm diameter extruder was equipped with 15 barrel segments for a total length to diameter ratio of 60. Polybond 3200 MAH-g-PP pellets were fed to the extruder hopper under nitrogen purge in the first barrel section using a K-Tron Model T20 feeder. The DEDA was injected into the extruder using an Eldex piston (HPLC) pump in the main hopper. The unreacted DEDA was removed by pulling a 50.8 cm (20 inch) Hg vacuum via a devolatilization port located at the 13th barrel and trapped in 2 knock-out pots cooled with dry ice. The polymer melt was extruded through a two-hole die into a water bath and strand pelletized. Extruder barrel temperature was set between 180 °C and 230 °C. Process conditions to produce the DEDA-g-PP are provided in Table B.

Table B

| Process Conditions | Value |
|---|---|
| Polymer Feed Rate, kg/hr (lb/hr) | 4.5 (10) |
| DEDA Feed Rate, mL/min | 0.44 |
| Extruder RPM | 300 |

2B. Functionalization: Preparation of Functionalized Polyolefin Elastomers

A Coperion ZSK-25MC twin-screw extruder was used for both the reactive extrusion process of the MAH-grafting and imidization reactions of the INFUSE 9530, INFUSE 9507, ENGAGE 8402, and ENGAGE 8450 resins. The extruder is equipped with 25-mm diameter twin screws and 12 barrel segments for a total length to diameter ratio of 48. There are 11 independently controlled barrel sections with electric heating and water cooling. Polymer pellets were fed to the extruder hopper under nitrogen purge in the first barrel section using a K-Tron Model KCLQX3 loss-in-weight feeder. The maleic anhydride was first dissolved in methyl ethyl ketone at a weight ratio of 1:1, and then a predetermined amount of peroxide (Luperox 101 peroxide, 2,5 dimethyl 2,5-Di-t-butylperoxyhexane) was added to the solution in the fume hood (MAH/Peroxide = 20). The maleic anhydride/peroxide/methyl ethyl ketone solution was injected into the extruder at the 4th barrel section using an HPLC pump. The methyl ethyl ketone, un-reactive maleic anhydride, and peroxide byproducts were removed via the devolatilization port located at the 11th barrel and trapped in 3 knock-out pots cooled with dry ice. This devolatilization system was protected with a nitrogen atmosphere. The polymer melt was extruded through a two-hole die (0.125" hole diameter) into an underwater pelletizing system quenched by chilled water (15 °C). Extruder barrel temperature was set between 180 °C and 230 °C. A summary of the process conditions for the maleation step are in Table C below.

Table C

| Process Condition | Value |
|---|---|
| Polymer Feed Rate, kg/hr (lb/hr) | 8.77 (19.33) |
| HPLC Feed Rate (MAH, peroxide, MEK solution), mL/min | 4.83 |
| HPLC injection pressure, MPa (psi) | 2.41 (350) |
| Extruder RPM | 350 |
| Vacuum, cm (in) Hg | 66 (26) |

Upon maleation, the resins exhibited average MAH-grafting level of 0.9 to 1.1 wt% and MI of 0.3 to 11.4 g/10 min. MAH grafting level was determined by a Fourier Transform Infrared (FTIR) spectroscopy measurement. Polymer pellets were molded into film using a Carver hydraulic press at 200 °C for 30 seconds under 1361 kg (3,000 lb) force at ambient atmosphere. The polymer film with a thickness of 76.2 $\mu$m (3 mil) was cooled by transferring the plates to the lower level platens set at ambient temperature. FTIR spectra were collected using a Nicolet 6700 FTIR at a resolution of 4 cm$^{-1}$. The maleic anhydride grafting level was determined from the ratio of the height of the peak at ca. 1790 cm$^{-1}$ corresponding to the carbonyl stretch of the anhydride, to the height of 2751 cm$^{-1}$ by using the following equation based on a second order polynomial models.

$$wt\% \, MAH = 0.0344 \times \left[\frac{(peak \; height \; @ \; ca. \, 1790 \; cm^{-1})}{(peak \; height \; @ \; ca. \, 2751 \; cm^{-1})}\right]^2$$
$$+ \; 0.1925 \times \frac{(peak \; height \; @ \; ca. \, 1790 \; cm^{-1})}{(peak \; height \; @ \; ca. \, 2751 \; cm^{-1})} + 0.0767$$

The amine-functionalization reactive extrusion of the MAH-g-POEs resin with N-ethylethylenediamine (DEDA) utilized the same reactive extrusion system as MAH-g-POEs described above, except that an ISCO pump (1000D) instead of a HPLC pump was employed to inject the N-ethylethylenediamine into the extruder. The MAH-g-POE pellets were fed to the extruder hopper under nitrogen purge in the first barrel section using a K-Tron Model KCLQX3 loss-in-weight feeder. The liquid N-ethylethylenediamine was injected into the extruder at 4th barrel section using an ISCO pump. Extruder barrel temperature was set between 180 °C and 230 °C. The un-reactive N-ethylethylenediamine and water byproduct were removed via a vacuum line-trap system, which was made of three knock-out pots and a vacuum pump, through a devolatilization port located at the 11th barrel. This devolatilization system was protected with a nitrogen atmosphere. The polymer melt was extruded through a two-hole die (0.318 (0.125") hole diameter) into an underwater pelletizing system quenched by chilled water (15 °C). The MI of the resulting materials was from 0.4 g/10 min to 22.4 g/10 min. Process conditions for the imidization step are in Table D below.

Table D

| Process Condition | Value |
|---|---|
| Polymer Feed Rate, kg/hr (lb/hr) | 6.8 (15) |
| DEDA Feed Rate, mL/min | 2.74 |
| ISCO pump injection pressure, MPa (psi) | 2.07 (300) |
| Extruder RPM | 350 |
| Vacuum, cm (in) Hg | 71 (28) |

3. Compounding of Blends

A. *Haake Blending*

Blends (CS F - CS K, IE 5 - IE 8) were prepared on a RS5000 Torque Rheometer (Rheometer Services, Inc.) equipped with a Haake Rheomix 600 mixer and standard roller blades. The temperature was set to 200 °C. Rotor speed was initially 10 RPM. All components were added to the mixer under a nitrogen sweep (total batch size was 50 g) and the plunger on the mixer was lowered. Once the components had melted (as indicated by the measured torque decreasing and reaching a steady state) mixing was continued at 50 RPM for 5 minutes. The sample was then immediately offloaded from the mixer and compressed into a patty using a Carver hydraulic press set at 20 °C and 1.38 MPa (200 psi) for a time of three minutes. Portions of the sample were used for measurement of rheology and for preparation of compression molded plaques.

B. *Twin Screw Extrusion*

Blends (CS A - CS E, IE 1 - IE 4) were prepared on a Coperion ZSK 26 twin screw extruder (1125 mm barrel length with 11 barrel sections, screw diameter was 25.5 mm, extruder barrel inner diameter was 26 mm, 40 horsepower motor, maximum screw speed was 1,200 RPM, maximum torque was 106 Nm) equipped with a two-hole die, water bath, and strand cutter. The polymer components were dry-blended along with the anti-oxidant powder. All components were added via the main feed throat under a nitrogen sweep via a K-Tron T-20 single screw loss-in-weight feeder. The compound was extruded as strands, which were cooled in a 1.8 metre (6-foot)-long water bath (water temperature was 13 °C), passed under an air knife, pelletized using a strand cutter, and dropped into a plastic bag. All compounds were dried by purging with a nitrogen stream overnight. The process conditions used for the twin screw extrusion compounding are in Table E1. Portions of the pelletized sample were used for measurement of rheology and melt flow rate and for preparation of injection molded parts.

Table E1

| Process Condition | Value |
|---|---|
| Temperature, Zone 2, °C | 130 |
| Temperature, Zone 3, °C | 180 |
| Temperature, Zone 4 - Zone 11, °C | 200 |
| Die Temperature, °C | 200 |
| Extruder RPM | 300 |
| Total Feed Rate, kg/hr (lb/hr) | 14 (30) |

C. *Twin Screw Extrusion (Genome Line)*

Blends (CS L - CS T, IE 9 - IE 24) were prepared on a Coperion ZSK18 MEGAlab co-rotating twin screw extruder (maximum screw speed was 1,200 RPM, maximum torque was 18 Nm/cm$^3$, length/diameter = 40, outer diameter/inner diameter = 1.55). The polymer components were dry-blended along with the anti-oxidant powder. All components were added via the main feed throat via a loss-in-weight feeder. The compounds were immediately injection molded. The process conditions used for the twin screw extrusion compounding are in Table E2.

Table E2

| Process Condition | Value |
|---|---|
| Temperature, Zone 1, °C | 145 |
| Temperature, Zone 2, °C | 175 |
| Temperature, Remaining Zones, °C | 190 |
| Extruder RPM | 300 |
| Total Feed Rate, kg/hr (lb/hr) | 4.5 (10) |

4. Molding of Parts

A. *Compression Molding*

Compounds prepared by Haake blending were converted to test samples for mechanical testing by compression molding. Samples were compression molded in accordance with ASTM D4703 using a Carver 30-ton hydraulic press. Plaques 11.4 cm (4.5 inch) x 11.4 cm (4.5 inch) x 0.318 cm (0.125 inch) were molded using a pressure of 207 MPa (30,000 psi) and platen temperature of 220 °C for 4 min, followed by quench cooling on a separate set of platens at a temperature of 20 °C and pressure of 207 MPa (30,000 psi) for 3 min.

B. *Injection Molding*

Compounds (CS A - CS E, IE 1 - IE 4) in pellet form prepared by twin screw extrusion were converted to test samples for mechanical testing by injection molding on a Toyo Plastar Si-90 electric injection molding machine equipped with an Axxicon ISO Manufactured (AIM) Quick Change Mould base. ASTM D638, Type I tensile bars (0.318 cm (0.125 inch) thick) were molded using an insert gated according to ASTM D3641-02 table 1 (2.1 x 19 mm) with a Z-runner (2 tensile bars per shot). 10.16 cm (4-inch) diameter, 0.318 cm (0.125 inch) thick discs were molded using an insert with 2 parts per shot that are side-gated. Injection molding conditions are listed in Table F1 below. The tensile bars were used to measure flexural modulus, tensile yield strength, tensile elongation at break and notched Izod impact properties. The discs were used to measure MAII, dart impact, and light transmittance properties. (1) Flexural modulus, tensile yield strength, tensile elongation at break, and notched Izod impact properties (measured on the tensile bars) and (2) MAII, dart impact and light transmittance properties (measured on 10.16 cm (4-inch) diameter, 0.318 cm (0.125 inch) discs) are referred to as "molded article property" or "molded article properties."

Table F1--Injection mold conditions for molded article properties

| Condition | 10.16 cm (4 in) dia, 0.318 cm (0.125 in) thick Disc | ASTM D638 Type I Tensile Bar |
|---|---|---|
| Temperature, Feed throat, °C | 48 | 48 |
| Temperature, Zone 1 - Zone 5, °C | 226 | 226 |
| Dosage volume, mm | 63.25 | 61.5 |
| Injection switch-over volume, mm | 15 | 15 |
| Back-up delay, sec | 5.5 | 5.5 |
| Injection pressure, MPa (Bar) | 200 (2000) | 200 (2000) |
| Injection speed, mm/s | 40 | 40 |
| Hold pressure, MPa (Bar) | 17.5 (175) | 23.0 (230) |
| Back Pressure, MPa (Bar) | 5 (50) | 5 (50) |
| Screw speed, RPM | 90 | 90 |
| Decompression volume, mm | 5 | 5 |
| Mold Temperature, °C | 32 | 32 |
| Hold Time, sec | 25 | 25 |
| Cool Time, sec | 20 | 20 |

C. *Injection Molding at Genome line*

Compounds (CS L - CS T, IE 9 - IE 24) prepared by twin screw extrusion were converted to test samples for mechanical testing by injection molding on a Sodick GL100A 90719 kg (100-ton) injection molding machine equipped with a Master Unit Die frame manufactured by Master Precision. ASTM D638, Type 1 tensile bars (0.318 cm (0.125 inch) thick) were molded using an insert gated according to ASTM D3641-02 table I (2.1 x 19 mm) with a Z-runner (2 tensile bars per shot). 10.16 cm (4 inch) diameter, 0.318 cm (0.125 inch) thick discs were molded using a side-gated insert. Injection molded conditions are listed in Table F2 below. The tensile bars were used to measure flexural modulus, tensile yield strength, tensile elongation at break, and notched Izod impact properties. The discs were used to measure MAII, dart impact, and light transmittance properties. (1) Flexural modulus, tensile yield strength, tensile elongation at break, and notched Izod impact properties (measured on the tensile bars) and (2) MAII, dart impact and light transmittance properties (measured on 10.16 cm (4-inch) diameter, 0.318 cm (0.125 inch) discs) are referred to as "molded article property" or "molded article properties."

Table F2--Injection mold conditions for molded article properties

| Condition | Value |
|---|---|
| Temperature, all zones, °C | 190 |
| Injection speed, cc/s | 30 |
| Mold Temperature, °C | 38 |
| Hold Time, sec | 7 |
| Cool Time, sec | 20 |

Table 1A: Compositions

| | CS A | IE 1 | CS L | IE 9 | CS M | IE 10 | CS N | IE 11 | IE 12 | CSO | IE 13 | CS P | IE 14 | CS Q | IE 15 |
|---|---|---|---|---|---|---|---|---|---|---|---|---|---|---|---|
| Braskem PP D115A, wt% | 69.8 | 64.8 | 69.8 | 64.8 | 69.8 | 64.8 | 69.8 | 64.8 | 64.8 | 69.8 | 64.8 | 41.9 | 39.4 | 41.9 | 39.4 |
| Braskem PP F1000HC, wt% | | | | | | | | | | | | 27.9 | 25.4 | 27.9 | 25.4 |
| FUSABOND P613, wt% | | 5.0 | | | | 5.0 | | 5.0 | 5.0 | | 5.0 | | 5.0 | | 5.0 |
| Polybond 3200, wt% | | | | 5.0 | | | | | | | | | | | |
| INFUSE 9530, wt% | 30.0 | 25.0 | 30.0 | 25.0 | | | | | | | | | | | |
| INFUSE 9507, wt% | | | | | 30.0 | 25.0 | | | | | | 30.0 | 25.0 | | |
| ENGAGE 8450, wt% | | | | | | | 30.0 | 25.0 | 25.0 | | | | | 30.0 | 25.0 |
| ENGAGE 8402, wt% | | | | | | | | | | 30.0 | 25.0 | | | | |
| DEDA-g-INFUSE 9530, wt% | | 5.0 | | 5.0 | | | | | 5.0 | | | | | | |
| DEDA-g-ENGAGE 8450, wt% | | | | | | | | | 5.0 | | | | | | 5.0 |
| DEDA-g-ENGAGE 8402, wt% | | | | | | | | | | | 5.0 | | | | |
| DEDA-g-INFUSE 9507, wt% | | | | | | 5.0 | | | | | | | 5.0 | | |
| Irganox B225, wt% | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| MFR (2.16 kg, 230 °C), dg/min | 10.9 | 4.4 | -- | -- | -- | -- | -- | -- | -- | -- | -- | -- | -- | -- | -- |
| DMS (230 °C) Viscosity at 0.1 rad/s, Pa-s | 1,639 | 2,372 | 1,749 | 2,323 | 1,750 | 2,460 | 1,898 | 2,291 | 2,007 | 1,296 | 1,906 | 988 | 1,539 | 1,145 | 1,301 |
| DMS (230 °C) Viscosity at 100 rad/s, Pa-s | 308 | 309 | 355 | 338 | 339 | 332 | 381 | 348 | 362 | 234 | 218 | 230 | 236 | 260 | 255 |
| DMS (230 °C) tan $\delta$ at 0.1 rad/s | 3.6 | 1.8 | 3.3 | 2.2 | 3.6 | 2.2 | 3.6 | 2.1 | 2.8 | 3.0 | 2.2 | 3.8 | 2.3 | 4.6 | 2.6 |

Table 1B: Molded article properties for molded articles made from the compositions of Table 1A

| | CS A | IE 1 | CS L | IE 9 | CS M | IE 10 | CS N | IE 11 | IE 12 | CS O | IE 13 | CS P | IE 14 | CS Q | IE 15 |
|---|---|---|---|---|---|---|---|---|---|---|---|---|---|---|---|
| Flexural Modulus, MPa | 851 | 966 | 1012 | 1076 | 1011 | 1057 | 1164 | 1160 | 1169 | 1053 | 1166 | 1244 | 1145 | 1377 | 1275 |
| Tensile Yield Strength, MPa | 20.9 | 22.7 | 20.2 | 20.8 | 19.6 | 21.2 | 24.8 | 24.2 | 23.6 | 23.2 | 26.0 | 22.9 | 21.5 | 26.3 | 27.6 |
| Tensile Elongation at break, % | 482 | >550 | 254 | 32 | 168 | 181 | 155 | 621 | 120 | 181 | 174 | 152 | 209 | 115 | 225 |
| Notched Izod, 23 °C, kJ/m$^2$ | 31.6 | 64.4 | 36.1 | 53.0 | 57.3 | 56.9 | 11.7 | 30.6 | 25.9 | 8.4 | 34.5 | 50.9 | 51.5 | 8.3 | 8.2 |
| Notched Izod, 0 °C, kJ/m$^2$ | 8.4 | 33.6 | 4.7 | 24.1 | 25.0 | 35.1 | 4.0 | 4.6 | 4.2 | 4.4 | 5.4 | 12.7 | 17.4 | 4.0 | 4.2 |
| Notched Izod, -30 °C, kJ/m$^2$ | 5.5 | 7.5 | 4.0 | 4.6 | 4.8 | 6.7 | 3.0 | 2.7 | 3.0 | 2.3 | 2.8 | 5.7 | 5.1 | 2.7 | 2.7 |
| MAII, 0 °C, Ductility, % | - | - | - | - | - | - | 100% | 100% | 100% | 0% | 100% | - | - | 60% | 100% |
| MAII, -10 °C, Ductility, % | - | - | - | - | - | - | 100% | 100% | 80% | - | - | - | - | 20% | 60% |
| MAII, -20 °C, Ductility, % | 0% | 100% | 100% | 100% | 100% | 100% | 0% | 0% | 0% | 0% | 0% | 100% | 100% | 0% | 0% |
| MAII, -30 °C, Ductility, % | - | 100% | 100% | 40% | 100% | 100% | - | - | - | - | - | 100% | 100% | - | - |
| MAII, -40 °C, Ductility, % | - | 100% | 40% | 20% | 100% | 100% | - | - | - | - | 0% | 60% | 60% | - | - |
| MAII, 0 °C, Peak Energy, J | - | - | - | - | - | - | 24.6 | 24.2 | 23.1 | 12.3 | 23.4 | - | - | 20.9 | 22.2 |
| MAII, -10 °C, Peak Energy, J | - | - | - | - | - | - | 26.3 | 24.0 | 25.7 | | | - | - | 23.7 | 24.4 |
| MAII, -20 °C, Peak Energy, J | 21.5 | 23.9 | 28.5 | 24.2 | 23.2 | 22.8 | 21.5 | 9.0 | 11.8 | 10.3 | 6.4 | 22.6 | 24.9 | 10.1 | 13.9 |
| MAII, -30 °C, Peak Energy, J | - | 22.3 | 24.2 | 22.5 | 23.4 | 22.2 | - | - | - | - | - | 22.2 | 22.0 | - | - |
| MAII, -40 °C, Peak Energy, J | - | 24.6 | 12.3 | 6.5 | 22.1 | 22.8 | - | - | - | - | 1.6 | 18.7 | 19.8 | - | - |
| MAII, 0 °C, Total Energy, J | - | - | - | - | - | - | 39.7 | 38.4 | 39.8 | 12.7 | 34.4 | - | - | 33.0 | 37.5 |
| MAII, -10 °C, Total Energy, J | - | - | - | - | - | - | 41.8 | 38.3 | 38.4 | - | - | - | - | 36.1 | 35.5 |
| MAII, -20 °C, Total Energy, J | 24.4 | 38.4 | 44.6 | 40.0 | 40.4 | 37.2 | 24.4 | 10.0 | 12.5 | 10.6 | 6.8 | 37.3 | 47.5 | 11.6 | 15.0 |
| MAII, -30 °C, Total Energy, J | - | 33.1 | 40.4 | 31.2 | 38.2 | 36.8 | - | - | - | - | - | 37.3 | 36.0 | - | - |
| MAII, -40 °C, Total Energy, J | - | 35.9 | 19.0 | 10.3 | 34.7 | 36.4 | - | - | - | - | 2.3 | 28.6 | 31.0 | - | - |
| Transmittance, % | 64% | 59% | 65% | 60% | 42% | 39% | 73% | 69% | 69% | 71% | 69% | 42% | 40% | 71% | 68% |

Table 2A: Compositions

| | CS B | IE 2 | CS L | IE 16 | CS M | IE 17 | CS O | IE 18 |
|---|---|---|---|---|---|---|---|---|
| Braskem PP D115A, wt% | 69.8 | 64.8 | 69.8 | 64.8 | 69.8 | 64.8 | 69.8 | 64.8 |
| DEDA-g-PP, wt% | | 5.0 | | 5.0 | | 5.0 | | 5.0 |
| INFUSE 9530, wt% | | | 30.0 | 25.0 | | | | |
| POE 1, wt% | 30.0 | 25.0 | | | | | | |
| INFUSE 9507, wt% | | | | | 30.0 | 25.0 | | |
| ENGAGE 8402, wt% | | | | | | | 30.0 | 25.0 |
| MAH-g-ENGAGE 8402, wt% | | | | | | | | 5.0 |
| MAH-g-INFUSE 9530, wt% | | | | 5.0 | | | | |
| FUSABOND N493, wt% | | 5.0 | | | | | | |
| Irganox B225, wt% | 0.2 | 0.2 | 0.2 | 0.2 | 0.2 | 0.2 | 0.2 | 0.2 |
| MFR (2.16 kg, 230 °C), dg/min | 7.0 | 6.6 | - | - | - | - | - | - |
| DMS (230 °C) Viscosity at 0.1 rad/s, Pa-s | 1,965 | 2,004 | 1,749 | 2,290 | 1,750 | 2,241 | 1,296 | 2,141 |
| DMS (230 °C) Viscosity at 100 rad/s, Pa-s | 440 | 399 | 355 | 345 | 339 | 332 | 234 | 228 |
| DMS (230 °C) tan δ at 0.1 rad/s | 6.2 | 4.0 | 3.3 | 2.9 | 3.6 | 2.7 | 3.0 | 2.5 |

Table 2B: Molded article properties for molded articles made from the compositions of Table 2A

| Example | CS B | IE 2 | CS L | IE 16 | CS M | IE 17 | CS O | IE 18 |
|---|---|---|---|---|---|---|---|---|
| Flexural Modulus, MPa | 830 | 798 | 1012 | 1066 | 1011 | 969 | 1053 | 1135 |
| Tensile Yield Strength, MPa | 20.7 | 20.5 | 20 | 18 | 20 | 20 | 23 | 24 |
| Tensile Elongation at break, % | 519 | >550 | 254 | 148 | 168 | 329 | 181 | 22 |
| Notched Izod, 23 °C, kJ/m$^2$ | 67.1 | 72.3 | 36.1 | 49.4 | 57.3 | 63.5 | 8.4 | 34.8 |
| Notched Izod, 0 °C, kJ/m$^2$ | 54.3 | 62.1 | 4.7 | 6.3 | 25.0 | 47.3 | 4.4 | 5.4 |
| Notched Izod, -30 °C, kJ/m$^2$ | 8.6 | 10.1 | 4.0 | 4.4 | 4.8 | 5.6 | 2.3 | 3.4 |
| MAII, 0 °C, Ductility, % | | | | | | | 0% | 100% |
| MAII, -10 °C, Ductility, % | | | | | | | | 100% |
| MAII, -20 °C, Ductility, % | 100% | 100% | 100% | 100% | 100% | 100% | 0% | 0% |
| MAII, -30 °C, Ductility, % | 100% | 100% | 100% | 100% | 100% | 100% | | |
| MAII, -40 °C, Ductility, % | 100% | 100% | 40% | 20% | 100% | 80% | | |
| MAII, 0 °C, Peak Energy, J | | | | | | | 12.3 | 22.9 |
| MAII, -10 °C, Peak Energy, J | | | | | | | | 24.8 |
| MAII, -20 °C, Peak Energy, J | 23.1 | 23.6 | 28.5 | 27.4 | 23.2 | 24.3 | 10.3 | 7.4 |
| MAII, -30 °C, Peak Energy, J | 21.5 | 25.7 | 24.2 | 22.4 | 23.4 | 23.7 | | |
| MAII, -40 °C, Peak Energy, J | 26.7 | 26.2 | 12.3 | 13.6 | 22.1 | 22.4 | | |
| MAII, 0 °C, Total Energy, J | | | | | | | 12.7 | 32.5 |
| MAII, -10 °C, Total Energy, J | | | | | | | | 37.7 |
| MAII, -20 °C, Total Energy, J | 42.0 | 42.2 | 44.6 | 43.3 | 40.4 | 41.3 | 10.6 | 7.9 |
| MAII, -30 °C, Total Energy, J | 36.6 | 44.1 | 40.4 | 37.4 | 38.2 | 38.6 | | |
| MAII, -40 °C, Total Energy, J | 41.9 | 40.5 | 19.0 | 17.5 | 34.7 | 33.1 | | |
| Transmittance, % | 42% | 42% | 65% | 63% | 42% | 41% | 71% | 69% |

Table 1A, 1B, 2A, and 2B include formulations with nonfunctionalized propylene-based polymer (A) as propylene homopolymerand the formulations do not include filler. Tables 1A and 2A includes the formulations and properties of the blends as prepared by twin screw extrusion. Tables 1B and 2B includes properties of injection molded parts made from the compositions. As compared to CS A, Inventive Example (IE) 1 has higher notched Izod impact across different temperatures, higher stiffness (flexural modulus), higher tensile yield strength, higher tensile elongation-at-break, higher ductility, similar high-shear viscosity, and slightly lower transmittance. IE 1 can be used as a translucent TPO with a good balance of light transmittance, stiffness, and impact toughness. IE 2 demonstrates that the amine and MAH functionality can also be inverted, with polypropylene functionalized with the amine and MAH grafted to the POE. In this case, a lower density POE is used as the majority POE. Even when using a lower density POE, IE 2 has higher notched Izod impact strength and higher tensile elongation than comparative sample (CS) B, while retaining other properties. In both cases, the inventive examples have lower tan $\delta$ at low shear rate, indicating higher melt elasticity for IE1 and IE2 compared to CS A and CS B, respectively. Higher melt elasticity can be beneficial for reducing tiger stripping in injection molded parts or improving processability for thermoformed compounds. Similarly, comparing IE 9 vs CS L, or IE 10 vs CS M, or IE 11 and IE 12 vs CS N, or IE 13 vs CS O, or IE 14 vs CS P, or IE 15 vs CS Q, or IE 16 vs CS L, or IE 17 vs CS M, or IE 18 vs CS O, the inventive compositions have higher notched Izod impact strength and/or higher dart impact ductility, with higher or comparable modulus, and similar light transmittance as the comparative examples, demonstrating that the functionality can be present on ethylene-based polymers of a range of different density, melt index, and polymer type (i.e. random interpolymer or multi-block interpolymer), the nonfunctionalized ethylene-based polymer can be of a range of different density, melt index, and polymer type (i.e. random interpolymer or multi-block interpolymer), and that the nonfunctionalized propylene homopolymer can be of a range of different melt flow rates.

Table 3A: Compositions

| | CS C | CS D | CS E | IE 3 | IE 4 | CS R | IE 19 | CS S | IE 20 |
|---|---|---|---|---|---|---|---|---|---|
| Profax SD242, wt% | 80.9 | 75.1 | 80.9 | 78.5 | 75.1 | 80.9 | 75.1 | 80.9 | 75.1 |
| DEDA-g-PP, wt% | | 5.0 | | 2.0 | 5.0 | | 5.0 | | 5.0 |
| POE 1, wt% | 18.9 | 19.7 | 13.9 | 17.3 | 14.7 | | | | |
| INFUSE 9530, wt% | | | | | | 18.9 | 14.7 | | |
| INFUSE 9507, wt% | | | | | | | | 18.9 | 14.7 |
| FUSABOND N493, wt% | | | | 5.0 | 2.0 | 5.0 | | | |
| MAH-g-INFUSE 9530, wt% | | | | | | | 5.0 | | |
| MAH-g-INFUSE 9507, wt% | | | | | | | | | 5.0 |
| Irganox B225, wt% | 0.2 | 0.2 | 0.2 | 0.2 | 0.2 | 0.2 | 0.2 | 0.2 | 0.2 |
| MFR (2.16 kg, 230 °C), dg/min | 21.6 | 23.5 | 19.5 | 21.6 | 21.9 | | | | |
| DMS (230 °C) Viscosity at 0.1 rad/s, Pa-s | 651 | 717 | 848 | 765 | 754 | 668 | 658 | 598 | 668 |
| DMS (230 °C) Viscosity at 100 rad/s, Pa-s | 215 | 229 | 240 | 235 | 217 | 226 | 213 | 213 | 207 |
| DMS (230 °C) tan $\delta$ at 0.1 rad/s | 15.0 | 13.2 | 8.6 | 10.0 | 7.0 | 7.53 | 8.713 | 8.406 | 7.056 |

Table 3B: Molded article properties for molded articles made from the compositions of Table 3A

| | CS C | CS D | CS E | IE 3 | IE4 | CS R | IE 19 | CS S | IE 20 |
|---|---|---|---|---|---|---|---|---|---|
| Flexural Modulus, MPa | 989 | 875 | 818 | 885 | 846 | 1108 | 1043 | 1035 | 988 |
| Tensile Yield Strength, MPa | 19.1 | 18.7 | 18.1 | 18.7 | 18.4 | 22 | 21 | 18 | 20 |
| Tensile Elongation at break, % | 53 | 175 | 155 | 134 | 411 | 69 | 170 | 159 | 360 |
| Notched Izod, 23 °C, kJ/m$^2$ | 10.5 | 11.9 | 12.3 | 12.9 | 14.4 | 13.1 | 23.8 | 13.4 | 44.3 |
| Notched Izod, 0 °C, kJ/m$^2$ | 7.6 | 6.4 | 7.3 | 8.0 | 6.9 | 8.3 | 9.7 | 8.2 | 11.5 |
| Notched Izod, -30 °C, kJ/m$^2$ | 6.3 | 6.0 | 7.0 | 7.2 | 7.6 | 6.1 | 7.6 | 7.0 | 8.5 |
| MAII, -20 °C, Ductility, % | 40% | 80% | 60% | 80% | 100% | 80% | 100% | 100% | 40% |
| MAII, -30 °C, Ductility, % | 20% | 40% | 60% | 20% | 60% | 100% | 100% | 60% | 60% |

(continued)

|  | CS C | CS D | CS E | IE 3 | IE4 | CS R | IE 19 | CS S | IE 20 |
|---|---|---|---|---|---|---|---|---|---|
| MAII, -40 °C, Ductility, % | 0% | 0% | 0% | 0% | 40% | 60% | 60% | 20% | 60% |
| MAII, -20 °C, Peak Energy, J | 24.0 | 21.6 | 21.8 | 28.4 | 27.0 | 29.3 | 27.6 | 28.6 | 13.4 |
| MAII, -30 °C, Peak Energy, J | 20.6 | 22.9 | 23.7 | 26.6 | 24.3 | 26.4 | 24.3 | 21.7 | 21.8 |
| MAII, -40 °C, Peak Energy, J | 22.9 | 24.6 | 24.5 | 25.2 | 25.4 | 22.2 | 18.4 | 25.3 | 18.7 |
| MAII, -20 °C, Total Energy, J | 38.1 | 33.6 | 35.8 | 41.1 | 40.8 | 40.8 | 46.9 | 44.3 | 18.8 |
| MAII, -30 °C, Total Energy, J | 32.4 | 36.2 | 37.9 | 38.5 | 38.0 | 46.3 | 39.6 | 32.7 | 33.4 |
| MAII, -40 °C, Total Energy, J | 27.0 | 33.6 | 37.3 | 35.3 | 37.6 | 34.0 | 27.0 | 39.5 | 32.1 |
| Transmittance, % | 50% | 50% | 52% | 51% | 51% | 51% | 52% | 47% | 47% |

Table 4A: Compositions

|  | CS R | IE 21 | IE 22 | CS S | IE23 | CS T | IE 24 |
|---|---|---|---|---|---|---|---|
| Profax SD242, wt% | 80.9 | 75.1 | 75.1 | 80.9 | 75.1 | 80.9 | 75.1 |
| FUSABOND P613, wt% |  | 5.0 |  |  | 5.0 |  | 5.0 |
| Polybond 3200, wt% |  |  | 5.0 |  |  |  |  |
| INFUSE 9530, wt% | 18.9 | 14.7 | 14.7 |  |  |  |  |
| INFUSE 9507, wt% |  |  |  | 18.9 | 14.7 |  |  |
| ENGAGE 8450, wt% |  |  |  |  |  | 18.9 | 14.7 |
| DEDA-g-ENGAGE 8450, wt% |  |  |  |  |  |  | 5.0 |
| DEDA-g-INFUSE 9530, wt% |  | 5.0 | 5.0 |  |  |  |  |
| DEDA-g-INFUSE 9507, wt% |  |  |  |  | 5.0 |  |  |
| Irganox B225, wt% | 0.2 | 0.2 | 0.2 | 0.2 | 0.2 | 0.2 | 0.2 |
| MFR (2.16 kg, 230 °C), dg/min | - | - | - | - | - | - | - |
| DMS (230 °C) Viscosity at 0.1 rad/s, Pa-s | 668 | 666 | 914 | 598 | 673 | 612 | 889 |
| DMS (230 °C) Viscosity at 100 rad/s, Pa-s | 226 | 211 | 225 | 213 | 203 | 213 | 232 |
| DMS (230 °C) tan $\delta$ at 0.1 rad/s | 7.53 | 6.84 | 2.68 | 8.406 | 5.483 | 14.227 | 4.173 |

Table 4B: Molded article properties for molded articles made from the compositions of Table 4A

| Example | CS R | IE 21 | IE 22 | CS S | IE 23 | CS T | IE 24 |
|---|---|---|---|---|---|---|---|
| Flexural Modulus, MPa | 1108 | 1082 | 1041 | 1035 | 1028 | 1111 | 1031 |
| Tensile Yield Strength, MPa | 22 | 20 | 20 | 18 | 20 | 22 |  |
| Tensile Elongation at break, % | 69 | 114 | 92 | 159 | 237 | 62 |  |
| Notched Izod, 23 °C, kJ/m$^2$ | 13.1 | 24.3 | 41.6 | 13.4 | 58.7 | 12.4 | 13.1 |
| Notched Izod, 0 °C, kJ/m$^2$ | 8.3 | 10.3 | 11.0 | 8.2 | 11.9 | 6.9 | 7.6 |
| Notched Izod, -30 °C, kJ/m$^2$ | 6.1 | 7.6 | 7.5 | 7.0 | 9.2 | 5.8 | 5.5 |
| MAII, -20 °C, Ductility, % | 80% | 100% | 80% | 100% | 80% | 100% | 75% |
| MAII, -30 °C, Ductility, % | 100% | 80% | 40% | 60% | 100% | 60% | 40% |
| MAII, -40 °C, Ductility, % | 60% | 100% | 100% | 20% | 100% | 60% | 0% |
| MAII, -20 °C, Peak Energy, J | 29.3 | 23.7 | 21.8 | 28.6 | 25.8 | 23.8 | 24.8 |
| MAII, -30 °C, Peak Energy, J | 26.4 | 25.2 | 26.2 | 21.7 | 22.1 | 24.9 | 16.5 |
| MAII, -40 °C, Peak Energy, J | 22.2 | 21.5 | 21.7 | 25.3 | 25.0 | 23.3 | 20.9 |

(continued)

| Example | CS R | IE 21 | IE 22 | CS S | IE 23 | CS T | IE 24 |
|---|---|---|---|---|---|---|---|
| MAII, -20 °C, Total Energy, J | 40.8 | 38.4 | 32.8 | 44.3 | 39.7 | 38.0 | 37.5 |
| MAII, -30 °C, Total Energy, J | 46.3 | 39.0 | 35.8 | 32.7 | 36.3 | 35.7 | 22.4 |
| MAII, -40 °C, Total Energy, J | 34.0 | 36.6 | 37.2 | 39.5 | 41.4 | 39.7 | 25.5 |
| Transmittance, % | 51% | 49% | 49% | 47% | 44% | 56% | 50% |

In Table 3A, 3B, 4A, and 4B nonfunctionalized propylene-based polymer (A) is propylene impact copolymer (ICP) and the formulations do not include filler. Tables 3A and 4A include the formulations and properties of the blends as prepared by twin screw extrusion. Table 3B and 4B includes properties of injection molded parts made from the compositions. ICP contains ethylene-propylene rubber phase. IE 4 has higher tensile elongation-at-break, higher notched Izod impact strength (particularly at 23 °C), and higher ductility in multi-axial impact testing when compared to CS C-E. IE 3 contains a lower level of the grafted components and some improvement in multi-axial impact peak and total energy are observed versus CS C-E, but no significant improvement in notched Izod impact strength or multi-axial impact ductility are observed. CS C is a formulation without either functionalized component. CS D and CS E each contain only one of the functionalized components. Comparing IE 19 vs CS R, or IE 20 vs. CS S, or IE 21 and IE 22 vs CS R, or IE 23 vs CS S, or IE 24 vs CS T, the inventive compositions have higher notched Izod impact strength, similar modulus, and similar light transmittances as the comparative examples, demonstrating that a range of functionalized ethylene-based polymers and a range of different nonfunctionalized ethylene-based polymers can also be used with a propylene impact copolymer to achieve improvements in properties.

Table 5A: Compositions

| | CS F | CS G | CS H | IE 5 | IE 6 | IE 7 |
|---|---|---|---|---|---|---|
| Braskem PP D115A, wt% | 69.8 | 64.8 | 69.8 | 64.8 | 64.8 | 54.8 |
| FUSABOND P613, wt% | | 5.0 | | 5.0 | 5.0 | 15.0 |
| INFUSE 9530, wt% | 30.0 | 30.0 | 25.0 | 25.0 | 20.0 | 15.0 |
| DEDA-g-INFUSE 9530, wt% | | | 5.0 | 5.0 | 10.0 | 15.0 |
| Jetfil 700C, wt% | | | | | | |
| Irganox B225, wt% | 0.2 | 0.2 | 0.2 | 0.2 | 0.2 | 0.2 |
| DMS (230 °C) Viscosity at 0.1 rad/s, Pa-s | 1,623 | 1,417 | 1,570 | 2,191 | 2,271 | 2,927 |
| DMS (230 °C) Viscosity at 100 rad/s, Pa-s | 336 | 306 | 342 | 317 | 329 | 306 |
| DMS (230 °C) tan $\delta$ at 0.1 rad/s | 3.3 | 3.3 | 3.8 | 1.9 | 1.8 | 1.2 |

Table 5B: Molded article properties for molded articles made from the compositions of Table 5A

| | CS F | CS G | CS H | IE 5 | IE 6 | IE 7 |
|---|---|---|---|---|---|---|
| Notched Izod, 23 °C, kJ/m$^2$ | 5.4 | 5.5 | 5.9 | 62.6 | 64.5 | 65.9 |

Table 5A and 5B provide additional formulations based on nonfunctionalized propylene homopolymer (A) that do not contain talc. Table 5A includes the formulations and properties of the blends as prepared by Haake blending. Table 5B includes properties of compression molded parts made from the compositions. CS F is a formulation without either functionalized component. CS G and CS H each contain only one of the functionalized components. IE 5, IE 6, and IE 7 contain both functionalized components at various levels. IE 5-7 each has higher notched Izod impact strength compared to CS F-H. Similar to the inventive compositions in Table 1A/1B, IE 5-7 have similar high shear viscosity as CS F-H, but lower tan $\delta$ (indicating that IE 5-7 have higher melt elasticity compared to CS F, G, H).

Table 6A: Talc-filled Compositions

| | CS I | CS J | CS K | IE 8 |
|---|---|---|---|---|
| Braskem PP D115A, wt% | 62.8 | 57.8 | 62.8 | 57.8 |

(continued)

|  | CS I | CS J | CS K | IE 8 |
|---|---|---|---|---|
| FUSABOND P613, wt% |  | 5.0 |  | 5.0 |
| INFUSE 9530, wt% | 27.0 | 27.0 | 22.5 | 22.5 |
| DEDA-g-INFUSE 9530, wt% |  |  | 4.5 | 4.5 |
| Jetfil 700C Talc, wt% | 10.0 | 10.0 | 10.0 | 10.0 |
| Irganox B225, wt% | 0.2 | 0.2 | 0.2 | 0.2 |
| DMS (230 °C) Viscosity at 0.1 rad/s, Pa-s | 2,059 | 1,584 | 1,894 | 2,656 |
| DMS (230 °C) Viscosity at 100 rad/s, Pa-s | 397 | 352 | 423 | 386 |
| DMS (230 °C) tan $\delta$ at 0.1 rad/s | 3.0 | 3.3 | 5.0 | 2.1 |

Table 6B: Molded article properties for molded articles made from the compositions of Table 6A

|  | CS I | CS J | CS K | IE 8 |
|---|---|---|---|---|
| Notched Izod, 23 °C, kJ/m$^2$ | 3.4 | 3.5 | 5.7 | 11.2 |

Table 6A and Table 6B provide formulations based on nonfunctionalized propylene homopolymer (A) and also contain filler (E), namely, talc. Table 6A includes the formulations and properties of the blends as prepared by Haake blending. Table 6B includes properties of compression molded parts made from the compositions. CS I is a formulation without either functionalized component. CS J and CS K each contain only one of the functionalized components. IE 8, with both functionalized components, has higher notched Izod impact strength, similar high shear rate viscosity, and lower tan $\delta$ compared to CS I, J, and K.

**Claims**

1.  A composition comprising:

    (A) a nonfunctionalized propylene-based polymer;
    (B) a functionalized propylene-based polymer, and
    (C) a functionalized ethylene-based polymer,

    the functionalized propylene-based polymer (B) and the functionalized ethylene-based polymer (C) each having a different functional group, the functional group selected from the group consisting of an anhydride and an amine, wherein when the functional group of the functionalized propylene-based polymer (B) is an anhydride, the functional group of the functionalized ethylene-based polymer (C) is an amine; and wherein when the functional group of the functionalized propylene-based polymer (B) is an amine, the functional group of the functionalized ethylene-based polymer (C) is an anhydride, wherein an ethylene-based polymer is a polymer that contains a majority amount of polymerized ethylene based on the weight of the polymer, and wherein a propylene-based polymer is a polymer that contains a majority amount of polymerized propylene based on the weight of the polymer.

2.  The composition of claim 1 comprising

    (A) from 20 wt% to 98 wt% nonfunctionalized propylene-based polymer;
    (B) from 1 wt% to 50 wt% amine-functionalized propylene-based polymer;
    and
    (C) from 1 wt% to 50 wt% maleic anhydride-grafted ethylene-based polymer.

3.  The composition of claim 2 wherein the amine-functionalized propylene-based polymer is an N-ethylethylenediamine-functionalized propylene homopolymer having

    (i) a melt flow rate (2.16 kg, 190 °C) from 1 g/10 min to 2000 g/10 min as measured according to ASTM D1238, Condition 230 °C/2.16 kilogram (kg) weight, and

(ii) from 0.1 wt% to 10 wt% N-ethylethylenediamine, based on the total weight of the functionalized N-ethylethylenediamine-functionalized propylene homopolymer.

4. The composition of any of claims 2-3 wherein the maleic anhydride-grafted ethylene-based polymer has

(i) a melt index (2.16 kg, 190 °C) from 0.1 g/10 min to 2000 g/10 min as measured in accordance with ASTM D1238, Condition 190 °C/2.16 kilogram (kg) weight,
(ii) a maleic anhydride content from 0.1 wt% to 10 wt%, based on the total weight of the functionalized ethylene-based polymer, and
(iii) a base ethylene/$C_3$-$C_8$ $\alpha$-olefin copolymer having a density from 0.850 g/cc to 0.920 g/cc as measured in accordance with ASTM D792, Method B.

5. The composition of claim 1 comprising

(A) from 20 wt% to 98 wt% nonfunctionalized propylene-based polymer;
(B) from 1 wt% to 50 wt% maleic anhydride-grafted propylene-based polymer; and
(C) from 1 wt% to 50 wt% amine-functionalized ethylene-based polymer.

6. The composition of claim 5 wherein the maleic anhydride-grafted propylene-based polymer is a maleic anhydride-grafted propylene homopolymer having

(i) a melt flow rate (2.16 kg, 190 °C) from 1 g/10 min to 2000 g/10 min as measured according to ASTM D1238, Condition 230 °C/2.16 kilogram (kg) weight, and
(ii) a maleic anhydride content from 0.1 wt% to 10 wt%, based on the total weight of the functionalized propylene-based polymer.

7. The composition of any of claims 5-6 wherein the amine-functionalized ethylene-based polymer is an N-ethylethylenediamine-functionalized ethylene/$C_3$-$C_8$ $\alpha$-olefin copolymer having

(i) a melt index (2.16 kg, 190 °C) from 0.1 g/10 min to 2000 g/10 min as measured according to ASTM D1238, Condition 230 °C/2.16 kilogram (kg) weight,
(ii) an N-ethylethylenediamine content from 0.1 wt% to 10 wt%, based on the total weight of the N-ethylethylenediamine-functionalized ethylene/$C_3$-$C_8$ $\alpha$-olefin copolymer, and
(iii) a base ethylene/$C_3$-$C_8$ $\alpha$-olefin copolymer having a density from 0.850 g/cc to 0.920 g/cc as measured in accordance with ASTM D792, Method B.

8. The composition of any of claims 1-7 comprising
(D) a nonfunctionalized ethylene-based polymer.

9. The composition of claim 8 wherein the nonfunctionalized ethylene-based polymer is an ethylene/$C_3$-$C_8$ $\alpha$-olefin copolymer having

(i) a density from 0.850 g/cc to 0.920 g/cc as measured in accordance with ASTM D792, Method B, and
(ii) a melt index (2.16 kg, 190 °C) from 0.1 g/10 min to 2000 g/10 min as measured according to ASTM D1238, Condition 230 °C/2.16 kilogram (kg) weight.

10. The composition of claim 9 comprising

(A) from 50 wt% to 85 wt% nonfunctionalized propylene-based polymer;
(B) from 1 wt% to 10 wt% amine-functionalized propylene-based polymer having a melt flow rate (2.16 kg, 190 °C) from 40 g/10 min to 60 g/10 min as measured according to ASTM D1238, Condition 230 °C/2.16 kilogram (kg) weight;
(C) from 1 wt% to 10 wt% maleic anhydride-grafted ethylene-based polymer; and
(D) from 10 wt% to 25 wt% nonfunctionalized ethylene-based polymer.

11. The composition of claim 10 wherein the nonfunctionalized propylene-based polymer is a propylene homopolymer; and

the composition has a property selected from the group consisting of

(i) a melt flow rate (2.16 kg, 230 °C) from 5 g/10 min to 10 g/10 min as measured according to ASTM D1238, Condition 230 °C/2.16 kilogram (kg) weight,
(ii) a viscosity (230 °C) at 0.1 rad/s from 1900 Pa.s to 2400 Pa.s as measured by Dynamic Mechanical Spectroscopy (DMS) using the method as defined in the description,
(iii) a viscosity (230 °C) at 100 rad/s from 200 Pa.s to 500 Pa.s as measured by Dynamic Mechanical Spectroscopy (DMS) using the method as defined in the description,
(iv) a tan $\delta$ at 0.1 rad/s from 2.4 to 4.5 as measured by Dynamic Mechanical Spectroscopy (DMS) using the method as defined in the description, and
(v) combinations thereof.

12. A molded article composed of the composition of claim 11, the molded article having a molded article property selected from the group consisting of

a flexural modulus from 750 MPa to 1150 MPa as measured in accordance with ASTM D790, Procedure A, test Type 1,
a tensile yield strength from 15 MPa to 25 MPa as measured in accordance with ASTM D638 using 3.2 mm thick injection molded Type I tensile bars and a cross-head speed of 5.08 cm/min (2 in/m),
a tensile elongation at break greater than 20% as measured in accordance with ASTM D638 using 3.2 mm thick injection molded Type I tensile bars and a cross-head speed of 5.08 cm/min (2 in/m),
a notched Izod at 23°C from 30 kJ/m$^2$ to 80 kJ/m$^2$ as measured in accordance with ASTM D256, Method A,
a MAII total energy at -40 °C from 15 J to 50 J as measured in accordance with the method defined in the description,
a transmittance from 40% to 70% as measured in accordance with ASTM D1003 using 10.16 cm (four-inch) diameter, cm (0.125 inch) thick injection molded discs, and
combinations thereof.

13. The composition of claim 10 wherein the nonfunctionalized propylene-based polymer is a propylene impact copolymer; and

the composition has
a melt flow rate (2.16 kg, 230 °C) from 15 g/10 min to 25 g/10 min as measured according to ASTM D1238, Condition 230 °C/2.16 kilogram (kg) weight,
a viscosity (230 °C) at 0.1 rad/s from 650 Pa.s to 800 Pa.s as measured by Dynamic Mechanical Spectroscopy (DMS) using the method as defined in the description,
a viscosity (230 °C) at 100 rad/s from 200 Pa.s to 300 Pa.s as measured by Dynamic Mechanical Spectroscopy (DMS) using the method as defined in the description, and
a tan $\delta$ at 0.1 rad/s from 5.0 to 10.0 as measured by Dynamic Mechanical Spectroscopy (DMS) using the method as defined in the description.

14. A molded article composed of the composition of claim 13, the molded article having a molded article property selected from the group consisting of

a flexural modulus from 800 MPa to 1050 MPa as measured in accordance with ASTM D790, Procedure A, test Type 1,
a tensile yield strength from 15 MPa to 25 MPa as measured in accordance with ASTM D638 using 3.2 mm thick injection molded Type I tensile bars and a cross-head speed of 5.08 cm/min (2 in/m),
a tensile elongation at break from 100% to 500% as measured in accordance with ASTM D638 using 3.2 mm thick injection molded Type I tensile bars and a cross-head speed of 5.08 cm/min (2 in/m),
a notched Izod at 23°C from 10 kJ/m$^2$ to 50 kJ/m$^2$ as measured in accordance with ASTM D256, Method A,
a MAII total energy at -40 °C from 25 J to 40 J as measured in accordance with the method defined in the description,
a transmittance from 45% to 60% as measured in accordance with ASTM D1003 using 10.16 cm (four-inch) diameter, cm (0.125 inch) thick injection molded discs, and
combinations thereof.

15. The composition of claim 9 comprising

(A) from 50 wt% to 85 wt% nonfunctionalized propylene-based polymer that is a propylene homopolymer;

(B) from 1 wt% to 20 wt% maleic anhydride-grafted propylene-based polymer having a melt flow rate (2.16 kg, 190 °C) from 100 g/10 min to 140 g/10 min as measured according to ASTM D1238, Condition 230 °C/2.16 kilogram (kg) weight;

(C) from 1 wt% to 20 wt% functionalized ethylene-based polymer; and

(D) from 10 wt% to 30 wt% nonfunctionalized ethylene-based polymer.

**Patentansprüche**

1. Zusammensetzung, umfassend:

   (A) ein nicht funktionalisiertes Polymer auf Propylenbasis;
   (B) ein funktionalisiertes Polymer auf Propylenbasis und
   (C) ein funktionalisiertes Polymer auf Ethylenbasis,

   wobei das funktionalisierte Polymer auf Propylenbasis (B) und das funktionalisierte Polymer auf Ethylenbasis (C) jeweils eine unterschiedliche funktionelle Gruppe aufweisen, wobei die funktionelle Gruppe aus der Gruppe bestehend aus einem Anhydrid und einem Amin ausgewählt ist, wobei, wenn die funktionelle Gruppe des funktionalisierten Polymers auf Propylenbasis (B) ein Anhydrid ist, die funktionelle Gruppe des funktionalisierten Polymers auf Ethylenbasis (C) ein Amin ist; und wobei, wenn die funktionelle Gruppe des funktionalisierten Polymers auf Propylenbasis (B) ein Amin ist, die funktionelle Gruppe des funktionalisierten Polymers auf Ethylenbasis (C) ein Anhydrid ist, wobei ein Polymer auf Ethylenbasis ein Polymer ist, das überwiegend polymerisiertes Ethylen, bezogen auf das Gewicht des Polymers, enthält, und wobei ein Polymer auf Propylenbasis ein Polymer ist, das überwiegend polymerisiertes Propylen, bezogen auf das Gewicht des Polymers, enthält.

2. Zusammensetzung nach Anspruch 1, umfassend:

   (A) von 20 Gew.-% bis 98 Gew.-% nicht funktionalisiertes Polymer auf Propylenbasis;
   (B) von 1 Gew.-% bis 50 Gew.-% aminfunktionalisiertes Polymer auf Propylenbasis; und
   (C) von 1 Gew.-% bis 50 Gew.-% mit Maleinsäureanhydrid gepfropftes Polymer auf Ethylenbasis.

3. Zusammensetzung nach Anspruch 2, wobei es sich bei dem aminfunktionalisierten Polymer auf Propylenbasis um ein N-Ethylethylendiaminfunktionalisiertes Propylenhomopolymer handelt, aufweisend

   (i) eine Schmelzflussrate (2,16 kg, 190 °C) von 1 g/10 min bis 2000 g/10 min, gemessen nach ASTM D1238, Bedingung 230 °C/2,16 Kilogramm (kg) Gewicht, und
   (ii) von 0,1 Gew.-% bis 10 Gew.-% N-Ethylethylendiamin, basierend auf dem Gesamtgewicht des funktionalisierten N-Ethylethylendiamin-funktionalisierten Propylenhomopolymer.

4. Zusammensetzung nach einem der Ansprüche 2 bis 3, wobei das mit Maleinsäureanhydrid gepfropfte Polymer auf Ethylenbasis aufweist:

   (i) einen Schmelzindex (2,16 kg, 190 °C) von 0,1 g/10 min bis 2000 g/10 min, gemessen gemäß ASTM D1238, Bedingung 190 °C/2,16 Kilogramm (kg) Gewicht,
   (ii) einen Maleinsäureanhydridgehalt von 0,1 Gew.-% bis 10 Gew.-%, basierend auf dem Gesamtgewicht des funktionalisierten Polymers auf Ethylenbasis, und
   (iii) ein Basis-Ethylen/$C_3$-$C_8$-$\alpha$-Olefin-Copolymer, aufweisend eine Dichte von 0,850 g/cm$^3$ bis 0,920 g/cm$^3$, gemessen gemäß ASTM D792, Verfahren B.

5. Zusammensetzung nach Anspruch 1, umfassend:

   (A) von 20 Gew.-% bis 98 Gew.-% nicht funktionalisiertes Polymer auf Propylenbasis;
   (B) von 1 Gew.-% bis 50 Gew.-% mit Maleinsäureanhydrid gepfropftes Polymer auf Propylenbasis; und
   (C) von 1 Gew.-% bis 50 Gew.-% aminfunktionalisiertes Polymer auf Ethylenbasis.

6. Zusammensetzung nach Anspruch 5, wobei es sich bei dem mit Maleinsäureanhydrid gepfropften Polymer auf Propylenbasis um ein mit Maleinsäureanhydrid gepfropftes Propylenhomopolymer handelt, aufweisend

(i) eine Schmelzflussrate (2,16 kg, 190 °C) von 1 g/10 min bis 2000 g/10 min, gemessen nach ASTM D1238, Bedingung 230 °C/2,16 Kilogramm (kg) Gewicht, und

(ii) einen Maleinsäureanhydridgehalt von 0,1 Gew.-% bis 10 Gew.-%, basierend auf dem Gesamtgewicht des funktionalisierten Polymers auf Propylenbasis.

7. Zusammensetzung nach einem der Ansprüche 5 bis 6, wobei es sich bei dem aminfunktionalisierten Polymer auf Ethylenbasis um ein N-Ethylethylendiaminfunktionalisiertes Ethylen/ $C_3$-$C_8$-$\alpha$-Olefin-Copolymer handelt, aufweisend

(i) einen Schmelzindex (2,16 kg, 190 °C) von 0,1 g/10 min bis 2000 g/10 min, gemessen nach ASTM D1238, Bedingung 230 °C/2,16 Kilogramm (kg) Gewicht,

(ii) einen N-Ethylethylendiamin-Gehalt von 0,1 Gew.-% bis 10 Gew.-%, basierend auf dem Gesamtgewicht des N-Ethylethylendiamin-funktionalisierten Ethylen/ $C_3$-$C_8$-$\alpha$-Olefin-Copolymers, und

(iii) ein Basis-Ethylen/ $C_3$-$C_8$-$\alpha$-Olefin-Copolymer, aufweisend eine Dichte von 0,850 g/cm$^3$ bis 0,920 g/cm$^3$, gemessen gemäß ASTM D792, Verfahren B.

8. Zusammensetzung nach einem der Ansprüche 1 bis 7, umfassend
(D) ein nicht funktionalisiertes Polymer auf Ethylenbasis.

9. Zusammensetzung nach Anspruch 8, wobei das nicht funktionalisierte Polymer auf Ethylenbasis ein Ethylen/ $C_3$-$C_8$-$\alpha$-Olefin-Copolymer ist, aufweisend

(i) eine Dichte von 0,850 g/cm$^3$ bis 0,920 g/cm$^3$, gemessen gemäß ASTM D792, Verfahren B, und

(ii) einen Schmelzindex (2,16 kg, 190 °C) von 0,1 g/10 min bis 2000 g/10 min, gemessen nach ASTM D1238, Bedingung 230 °C/2,16 Kilogramm (kg) Gewicht.

10. Zusammensetzung nach Anspruch 9, umfassend:

(A) von 50 Gew.-% bis 85 Gew.-% nicht funktionalisiertes Polymer auf Propylenbasis;

(B) von 1 Gew.-% bis 10 Gew.-% aminfunktionalisiertes Polymer auf Propylenbasis mit einer Schmelzflussrate (2,16 kg, 190 °C) von 40 g/10 min bis 60 g/10 min, gemessen nach ASTM D1238, Bedingung 230 °C/2,16 Kilogramm (kg) Gewicht;

(C) von 1 Gew.-% bis 10 Gew.-% mit Maleinsäureanhydrid gepfropftes Polymer auf Ethylenbasis; und

(D) von 10 Gew.-% bis 25 Gew.-% nicht funktionalisiertes Polymer auf Ethylenbasis.

11. Zusammensetzung nach Anspruch 10, wobei das nicht funktionalisierte Polymer auf Propylenbasis ein Propylenhomopolymer ist; und
die Zusammensetzung eine Eigenschaft aufweist, die ausgewählt ist aus der Gruppe bestehend aus

(i) einer Schmelzflussrate (2,16 kg, 230 °C) von 5 g/10 min bis 10 g/10 min, gemessen nach ASTM D1238, Bedingung 230 °C/2,16 Kilogramm (kg) Gewicht,

(ii) einer Viskosität (230 °C) bei 0,1 rad/s von 1900 Pa·s bis 2400 Pa·s, gemessen mit dynamisch-mechanischer Spektroskopie (DMS) nach dem in der Beschreibung definierten Verfahren,

(iii) einer Viskosität (230 °C) bei 100 rad/s von 200 Pa·s bis 500 Pa·s, gemessen mit dynamisch-mechanischer Spektroskopie (DMS) nach dem in der Beschreibung definierten Verfahren,

(iv) einem tan $\delta$ bei 0,1 rad/s von 2,4 bis 4,5, gemessen mit dynamisch-mechanischer Spektroskopie (DMS) unter Verwendung des in der Beschreibung definierten Verfahrens, und

(v) Kombinationen davon.

12. Formteil, zusammengesetzt aus der Zusammensetzung nach Anspruch 11, wobei das Formteil eine Formteileigenschaft aufweist, die ausgewählt ist aus der Gruppe bestehend aus

einem Biegemodul von 750 MPa bis 1150 MPa, gemessen gemäß ASTM D790, Prozess A, Prüftyp 1,
einer Zugfestigkeit von 15 MPa bis 25 MPa, gemessen gemäß ASTM D638 unter Verwendung von 3,2 mm dicken, spritzgegossenen Zugstäben vom Typ I und einer Traversengeschwindigkeit von 5,08 cm/min (2 in/m),
einer Bruchdehnung von mehr als 20 %, gemessen gemäß ASTM D638, unter Verwendung von 3,2 mm dicken, spritzgegossenen Zugstäben vom Typ I und einer Traversengeschwindigkeit von 5,08 cm/min (2 in/m),
einer Izod-Kerbschlagzähigkeit bei 23 °C von 30 kJ/m$^2$ bis 80 kJ/m$^2$, gemessen gemäß ASTM D256, Verfahren A,

einer MAH-Gesamtenergie bei -40 °C von 15 J bis 50 J, gemessen gemäß dem in der Beschreibung definierten Verfahren,
einer Lichtdurchlässigkeit von 40 % bis 70 %, gemessen gemäß ASTM D1003 unter Verwendung von spritzgegossenen Scheiben mit einem Durchmesser von 10,16 cm (vier Zoll) und einer Dicke von cm (0,125 Zoll) sowie Kombinationen davon.

13. Zusammensetzung nach Anspruch 10, wobei das nicht funktionalisierte propylenbasierte Polymer ein Propylen-Schlagzähigkeitscopolymer ist; und
die Zusammensetzung aufweist:

eine Schmelzflussrate (2,16 kg, 230 °C) von 15 g/10 min bis 25 g/10 min, gemessen gemäß ASTM D1238, Bedingung 230 °C/2,16 Kilogramm (kg) Gewicht,
eine Viskosität (230 °C) bei 0,1 rad/s von 650 Pa·s bis 800 Pa·s, gemessen mit dynamisch-mechanischer Spektroskopie (DMS) nach dem in der Beschreibung definierten Verfahren,
eine Viskosität (230 °C) bei 100 rad/s von 200 Pa·s bis 300 Pa·s, gemessen mit dynamisch-mechanischer Spektroskopie (DMS) nach dem in der Beschreibung definierten Verfahren, und
ein tan $\delta$ bei 0,1 rad/s von 5,0 bis 10,0, gemessen mit Hilfe von dynamisch-mechanischer Spektroskopie (DMS) unter Verwendung des in der Beschreibung definierten Verfahrens.

14. Formteil, zusammengesetzt aus der Zusammensetzung nach Anspruch 13, wobei das Formteil eine Formteileigenschaft aufweist, die ausgewählt ist aus der Gruppe bestehend aus

einem Biegemodul von 800 MPa bis 1050 MPa, gemessen gemäß
ASTM D790, Prozess A, Prüftyp 1,
einer Zugfestigkeit von 15 MPa bis 25 MPa, gemessen gemäß ASTM D638 unter Verwendung von 3,2 mm dicken, spritzgegossenen Zugstäben vom Typ I und einer Traversengeschwindigkeit von 5,08 cm/min (2 in/m),
einer Bruchdehnung von 100 % bis 500 %, gemessen gemäß ASTM D638, mit 3,2 mm dicken, spritzgegossenen Zugstäben vom Typ I und einer Traversengeschwindigkeit von 5,08 cm/min (2 in/m),
einer Izod-Kerbschlagzähigkeit bei 23 °C von 10 kJ/m$^2$ bis 50 kJ/m$^2$, gemessen gemäß ASTM D256, Verfahren A,
einer MAH-Gesamtenergie bei -40 °C von 25 J bis 40 J, gemessen gemäß dem in der Beschreibung definierten Verfahren,
einer Lichtdurchlässigkeit von 45 % bis 60 %, gemessen gemäß ASTM D1003 unter Verwendung von spritzgegossenen Scheiben mit einem Durchmesser von 10,16 cm (vier Zoll) und einer Dicke von cm (0,125 Zoll), und Kombinationen davon.

15. Zusammensetzung nach Anspruch 9, umfassend:

(A) von 50 Gew.-% bis 85 Gew.-% nicht funktionalisiertes Polymer auf Propylenbasis, das ein Propylenhomopolymer ist;
(B) von 1 Gew.-% bis 20 Gew.-% mit Maleinsäureanhydrid gepfropftes Polymer auf Propylenbasis mit einer Schmelzflussrate (2,16 kg, 190 °C) von 100 g/10 min bis 140 g/10 min, gemessen gemäß ASTM D1238, Bedingung 230 °C/2,16 Kilogramm (kg) Gewicht;
(C) von 1 Gew.-% bis 20 Gew.-% funktionalisiertes Polymer auf Ethylenbasis; und
(D) von 10 Gew.-% bis 30 Gew.-% nicht funktionalisiertes Polymer auf Ethylenbasis.

**Revendications**

1. Composition comprenant :

(A) un polymère non fonctionnalisé à base de propylène ;
(B) un polymère fonctionnalisé à base de propylène, et
(C) un polymère fonctionnalisé à base d'éthylène,

le polymère fonctionnalisé à base de propylène (B) et le polymère fonctionnalisé à base d'éthylène (C) ayant chacun un groupe fonctionnel différent, le groupe fonctionnel étant choisi dans le groupe constitué d'un anhydride et d'une amine, dans laquelle, lorsque le groupe fonctionnel du polymère fonctionnalisé à base de propylène (B) est un anhydride, le groupe fonctionnel du polymère fonctionnalisé à base d'éthylène (C) est une amine ; et dans laquelle, lorsque le groupe fonctionnel du polymère fonctionnalisé à base de propylène (B) est une amine, le groupe fonctionnel du polymère fonctionnalisé à base d'éthylène (C) est un anhydride, dans laquelle un polymère à base d'éthylène est un polymère qui contient une quantité majoritaire d'éthylène polymérisé par rapport au poids du polymère, et dans laquelle un polymère à base de propylène est un polymère qui contient une quantité majoritaire de propylène polymérisé par rapport au poids du polymère.

2. Composition selon la revendication 1 comprenant

(A) de 20 % en poids à 98 % en poids de polymère non fonctionnalisé à base de propylène ;
(B) de 1 % en poids à 50 % en poids de polymère à base de propylène à fonctionnalité amine ; et
(C) de 1 % en poids à 50 % en poids de polymère à base d'éthylène greffé par anhydride maléique.

3. Composition selon la revendication 2, dans laquelle le polymère à base de propylène fonctionnalisé par amine est un homopolymère de propylène fonctionnalisé par N-éthyléthylènediamine ayant

(i) un indice de fluidité à l'état fondu (2,16 kg, 190 °C) allant de 1 g/10 min à 2 000 g/10 min, mesuré selon la norme ASTM D1238, condition 230 °C/poids de 2,16 kilogrammes (kg), et
(ii) de 0,1 % en poids à 10 % en poids de N-éthyléthylènediamine, par rapport au poids total de l'homopolymère de propylène fonctionnalisé par N-éthyléthylènediamine.

4. Composition selon l'une quelconque des revendications 2 à 3, dans laquelle le polymère à base d'éthylène greffé par anhydride maléique a

(i) un indice de fusion (2,16 kg, 190 °C) allant de 0,1 g/10 min à 2 000 g/10 min, mesuré conformément à la norme ASTM D1238, condition 190 °C/poids de 2,16 kilogrammes (kg),
(ii) une teneur en anhydride maléique allant de 0,1 % à 10 % en poids, par rapport au poids total du polymère fonctionnalisé à base d'éthylène, et
(iii) un copolymère de base éthylène/$\alpha$-oléfine en $C_3$-$C_8$ ayant une masse volumique allant de 0,850 g/cm$^3$ à 0,920 g/cm$^3$, mesurée conformément à la norme ASTM D792, méthode B.

5. Composition selon la revendication 1 comprenant

(A) de 20 % en poids à 98 % en poids de polymère non fonctionnalisé à base de propylène ;
(B) de 1 % en poids à 50 % en poids de polymère à base de propylène greffé par anhydride maléique ; et
(C) de 1 % en poids à 50 % en poids de polymère à base d'éthylène à fonctionnalité amine.

6. Composition selon la revendication 5, dans laquelle le polymère à base de propylène greffé par anhydride maléique est un homopolymère de propylène greffé par anhydride maléique ayant

(i) un indice de fluidité à l'état fondu (2,16 kg, 190 °C) allant de 1 g/10 min à 2 000 g/10 min, mesuré selon la norme ASTM D1238, condition 230 °C/poids de 2,16 kilogrammes (kg), et
(ii) une teneur en anhydride maléique allant de 0,1 % à 10 % en poids, par rapport au poids total du polymère fonctionnalisé à base de propylène.

7. Composition selon l'une quelconque des revendications 5 à 6, dans laquelle le polymère à base d'éthylène fonctionnalisé par amine est un copolymère éthylène/$\alpha$-oléfine en $C_3$-$C_8$ fonctionnalisé par N-éthyléthylènediamine ayant

(i) un indice de fusion (2,16 kg, 190 °C) allant de 0,1 g/10 min à 2 000 g/10 min, mesuré selon la norme ASTM D1238, condition 230 °C/poids de 2,16 kilogrammes (kg),
(ii) une teneur en N-éthyléthylènediamine allant de 0,1 % en poids à 10 % en poids, par rapport au poids total du copolymère éthylène/$\alpha$-oléfine en $C_3$-$C_8$ fonctionnalisé par N-éthyléthylènediamine, et
(iii) un copolymère de base éthylène/$\alpha$-oléfine en $C_3$-$C_8$ ayant une masse volumique allant de 0,850 g/cm$^3$ à 0,920 g/cm$^3$, mesurée conformément à la norme ASTM D792, méthode B.

8. Composition selon l'une quelconque des revendications 1 à 7 comprenant
(D) un polymère non fonctionnalisé à base d'éthylène.

9. Composition selon la revendication 8, dans laquelle le polymère non fonctionnalisé à base d'éthylène est un copolymère éthylène/α-oléfine en C$_3$-C$_8$ ayant

(i) une masse volumique allant de 0,850 g/cm$^3$ à 0,920 g/cm$^3$, mesurée conformément à la norme ASTM D792, méthode B, et
(ii) un indice de fusion (2,16 kg, 190 °C) allant de 0,1 g/10 min à 2 000 g/10 min, mesuré selon la norme ASTM D1238, condition 230 °C/poids de 2,16 kilogrammes (kg).

10. Composition selon la revendication 9 comprenant

(A) de 50 % en poids à 85 % en poids de polymère non fonctionnalisé à base de propylène ;
(B) de 1 % en poids à 10 % en poids de polymère à base de propylène fonctionnalisé par amine ayant un indice de fluidité à l'état fondu (2,16 kg, 190 °C) allant de 40 g/10 min à 60 g/10 min, mesuré selon la norme ASTM D1238, condition 230 °C/poids de 2,16 kilogrammes (kg) ;
(C) de 1 % en poids à 10 % en poids de polymère à base d'éthylène greffé par anhydride maléique ; et
(D) de 10 % en poids à 25 % en poids de polymère non fonctionnalisé à base d'éthylène.

11. Composition selon la revendication 10, dans laquelle le polymère non fonctionnalisé à base de propylène est un homopolymère de propylène ; et
la composition a une propriété choisie dans le groupe constitué de

(i) un indice de fluidité à l'état fondu (2,16 kg, 230 °C) allant de 5 g/10 min à 10 g/10 min, mesuré selon la norme ASTM D1238, condition 230 °C/poids de 2,16 kilogrammes (kg),
(ii) une viscosité (230 °C) à 0,1 rad/s allant de 1 900 Pa.s à 2 400 Pa.s, mesurée par spectroscopie mécanique dynamique (DMS) à l'aide de la méthode telle que définie dans la description,
(iii) une viscosité (230 °C) à 100 rad/s allant de 200 Pa.s à 500 Pa.s, mesurée par spectroscopie mécanique dynamique (DMS) à l'aide de la méthode telle que définie dans la description,
(iv) un tan δ à 0,1 rad/s allant de 2,4 à 4,5, mesuré par spectroscopie mécanique dynamique (DMS) à l'aide de la méthode telle que définie dans la description, et
(v) des combinaisons de ceux-ci.

12. Article moulé composé de la composition selon la revendication 11, l'article moulé ayant une propriété d'article moulé choisie dans le groupe constitué de

un module de flexion allant de 750 MPa à 1 150 MPa, mesuré conformément à la norme ASTM D790, procédure A, essai de type 1,
une limite apparente d'élasticité allant de 15 MPa à 25 MPa, mesurée conformément à la norme ASTM D638 à l'aide de barres de traction de type I moulées par injection de 3,2 mm d'épaisseur et d'une vitesse de traverse de 5,08 cm/min (2 po/m),
un allongement en traction à la rupture supérieur à 20 %, mesuré conformément à la norme ASTM D638 à l'aide de barres de traction de type I moulées par injection de 3,2 mm d'épaisseur et d'une vitesse de traverse de 5,08 cm/min (2 po/m),
une résistance au choc Izod sur éprouvette entaillée à 23 °C allant de 30 kJ/m$^2$ à 80 kJ/m$^2$, mesurée conformément à la norme ASTM D256, méthode A,
une énergie totale MAII à -40 °C allant de 15 J à 50 J, mesurée conformément à la méthode définie dans la description,
un coefficient de transmission allant de 40 % à 70 %, mesuré conformément à la norme ASTM D1003 à l'aide de disques moulés par injection de 10,16 cm (quatre pouces) de diamètre et de cm (0,125 pouce) d'épaisseur, et des combinaisons de ceux-ci.

13. Composition selon la revendication 10, dans laquelle le polymère non fonctionnalisé à base de propylène est un copolymère de propylène résistant aux chocs ; et

la composition a
un indice de fluidité à l'état fondu (2,16 kg, 230 °C) allant de 15 g/10 min à 25 g/10 min, mesuré selon la norme ASTM D1238, condition 230 °C/poids de 2,16 kilogrammes (kg),
une viscosité (230 °C) à 0,1 rad/s allant de 650 Pa.s à 800 Pa.s, mesurée par spectroscopie mécanique dynamique (DMS) à l'aide de la méthode telle que définie dans la description,

une viscosité (230 °C) à 100 rad/s allant de 200 Pa.s à 300 Pa.s, mesurée par spectroscopie mécanique dynamique (DMS) à l'aide de la méthode telle que définie dans la description, et

un tan $\delta$ à 0,1 rad/s allant de 5,0 à 10,0, mesuré par spectroscopie mécanique dynamique (DMS) à l'aide de la méthode telle que définie dans la description.

14. Article moulé composé de la composition selon la revendication 13, l'article moulé ayant une propriété d'article moulé choisie dans le groupe constitué de

un module de flexion allant de 800 MPa à 1 050 MPa, mesuré conformément à la norme ASTM D790, procédure A, test de type 1,

une limite apparente d'élasticité allant de 15 MPa à 25 MPa, mesurée conformément à la norme ASTM D638 à l'aide de barres de traction de type I moulées par injection de 3,2 mm d'épaisseur et d'une vitesse de traverse de 5,08 cm/min (2 po/m),

un allongement en traction à la rupture allant de 100 % à 500 %, mesuré conformément à la norme ASTM D638 à l'aide de barres de traction de type I moulées par injection de 3,2 mm d'épaisseur et d'une vitesse de traverse de 5,08 cm/min (2 po/m),

une résistance au choc Izod sur éprouvette entaillée à 23 °C allant de 10 $kJ/m^2$ à 50 $kJ/m^2$, mesurée conformément à la norme ASTM D256, méthode A,

une énergie totale MAII à -40 °C allant de 25 J à 40 J, mesurée conformément à la méthode définie dans la description,

un coefficient de transmission allant de 45 % à 60 %, mesuré conformément à la norme ASTM D1003 à l'aide de disques moulés par injection de 10,16 cm (quatre pouces) de diamètre et de cm (0,125 pouce) d'épaisseur, et des combinaisons de ceux-ci.

15. Composition selon la revendication 9 comprenant

(A) de 50 % en poids à 85 % en poids de polymère non fonctionnalisé à base de propylène qui est un homopolymère de propylène ;

(B) de 1 % en poids à 20 % en poids de polymère à base de propylène greffé par anhydride maléique ayant un indice de fluidité à l'état fondu (2,16 kg, 190 °C) allant de 100 g/10 min à 140 g/10 min, mesuré selon la norme ASTM D1238, condition 230 °C/poids de 2,16 kilogrammes (kg) ;

(C) de 1 % en poids à 20 % en poids de polymère fonctionnalisé à base d'éthylène ; et

(D) de 10 % en poids à 30 % en poids de polymère non fonctionnalisé à base d'éthylène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013090393 A
- US 7608668 B
- WO 2018022975 A
- US 5919983 A

**Non-patent literature cited in the description**

- Periodic Table of Elements. CRC Press, Inc., 1990
- **BERNHARD WUNDERLICH**. The Basis of Thermal Analysis, in Thermal Characterization of Polymeric Materials. 1997, vol. 92, 278-279